# FASCICULE DE BREVET EUROPEEN

(11) **EP 2 475 487 B1**
(45) Date de publication et mention de la délivrance du brevet: **25.01.2017**
(21) Numéro de dépôt: 10747903.2
(22) Date de dépôt: 03.09.2010
(51) Int. Cl.: B23K 1/00, B23K 1/19, B23K 1/20, C04B 37/00, C22C 28/00, C22C 29/18, B23K 35/30

(54) **PROCEDE D'ASSEMBLAGE DE PIECES EN MATERIAUX A BASE DE SIC PAR BRASAGE NON-REACTIF COMPRENANT DU SILICIUM ET DU NEODYME ; COMPOSITION DE BRASURE AVEC DE TELS ELEMENTS**
VERFAHREN ZUR ZUSAMMENFÜGUNG VON AUS SIC-MATERIALIEN HERGESTELLTEN TEILEN DURCH NICHTREAKTIVES LÖTEN ; LÖTZUSAMMENSETZUNGEN
METHOD OF ASSEMBLING PARTS MADE OF SIC MATERIALS BY NON-REACTIVE BRAZING ; BRAZING COMPOSITIONS

(30) Priorité: 08.09.2009 FR 0956116
(43) Date de publication de la demande: 18.07.2012
(73) Titulaire: Commissariat à l'Énergie Atomique et aux Énergies Alternatives, 75015 Paris (FR)
(72) Inventeur: CHAUMAT, Valérie, F-38760 Saint-Paul-de-Varces (FR); HENNE, Jean-François, F-62400 Bethune (FR)
(74) Mandataire: Ilgart, Jean-Christophe
(86) Numéro de dépôt international: PCT/EP2010/062995
(87) Numéro de publication internationale: WO 2011/029785

(56) Documents cités:
- EP-A1- 2 165 794
- JP-A- 8 052 590
- US-A- 5 447 683
- US-A1- 2003 038 166
- US-A1- 2006 162 849
- US-A1- 2008 223 489
- US-B1- 6 835 496

## Description

La présente invention est relative à un procédé d'assemblage de pièces en matériaux à base de carbure de silicium par brasage non-réactif, avec une composition de brasure non-réactive, afin notamment de réaliser des composants entièrement à base de carbure de silicium, conformément au préambule de la revendication 1 (voir, par exemple, US 5 447 683 A).

Le procédé d'assemblage selon l'invention est généralement mis en oeuvre à une température ne dépassant pas 1450°C, de préférence entre 1210°C et 1450°C.

L'invention a trait en outre à une composition pour le brasage non-réactif de pièces en matériaux à base de carbure de silicium comprenant une composition de brasure non-réactive comprenant du silicium et du Néodyme et, en outre, un apport d'un renfort. L'invention a également trait à une pâte, suspension, de brasure pour le brasage moyennement réfractaire non-réactif de pièces en matériaux à base de carbure de silicium comprenant une poudre d'une composition de brasure non-réactive comprenant du silicium et du Néodyme, et un liant, cément organique liquide.

On entend généralement par « moyennement réfractaire », une température maximale d'usage du composant assemblé généralement entre 1000°C et 1100°C.

Par matériaux "à base de carbure de silicium", on entend généralement un matériau dont la teneur en sic est supérieure ou égale à 50% en masse, de préférence supérieure ou égale à 80% en masse, de préférence encore de 100% en masse, dans ce dernier cas on peut dire que le matériau est constitué ou composé de carbure de silicium.

Le carbure de silicium peut se présenter sous la forme de fibres de carbure de silicium ou de poudre de carbure de silicium frittée ou liée par un liant en céramique.

Ces matériaux à base de carbure de silicium peuvent être notamment du carbure de silicium pur tel que du carbure de silicium pur α (SiCα) ou β (SiCα), des substrats en carbure de silicium infiltré de silicium (SiSiC), ou des matériaux composites à base de SiC tels que des matériaux composites à fibres et/ou à matrice de carbure de silicium.

Le domaine technique de l'invention peut être défini comme étant le brasage à une température de mise en oeuvre (température équivalente à la température du palier de brasage) ne dépassant pas généralement 1450°C, de préférence à une température de 1210°C à 1450°C.

Les assemblages concernés par la présente invention sont donc généralement considérés comme « moyennement réfractaires » c'est-à-dire que la température maximale d'utilisation de ces assemblages est généralement de l'ordre de 1000°C à 1100°C.

Ces assemblages peuvent rentrer dans la fabrication de composants de formes complexes nécessitant une très bonne tenue mécanique entre les substrats à base de carbure de silicium et éventuellement une étanchéité satisfaisante de part et d'autre du joint.

### ÉTAT DE LA TECHNIQUE ANTÉRIEURE

On sait qu'il est difficile de fabriquer des pièces de grandes dimensions en céramique, en particulier, en SiC. En effet, les tolérances après frittage des composants primaires en carbure de silicium de grandes dimensions sont mal maîtrisées et l'usinage de ces composants est inacceptable pour des raisons de coût.

Par ailleurs, et pour les mêmes raisons, il est généralement difficile de fabriquer des pièces de forme complexe avec des composés à base de silicium tels que le carbure de silicium.

Il est donc souvent préférable de fabriquer les pièces ou structures de grande dimension et/ou de forme complexe à partir d'éléments en céramiques de forme simple et/ou de petite taille, puis d'assembler ces éléments pour réaliser la structure finale.

Une telle technique est notamment nécessaire pour fabriquer des structures du type échangeur de chaleur, et des composants de structure en carbure de silicium ayant une température d'utilisation par exemple, jusqu'à 1000°C voire 1100°C.

Du fait des températures élevées, voisines par exemple de 1000°C, mises en oeuvre dans les applications des céramiques telles que le carbure de silicium, l'assemblage de ces céramiques par collage avec des adhésifs organiques est exclus, car les températures d'usage de ce type d'assemblage ne peuvent dépasser au maximum 200°C.

Les assemblages purement mécaniques, par exemple par agrafage ou par vissage n'assurent qu'un contact partiel et aléatoire entre les pièces. Les assemblages ainsi obtenus ne peuvent pas être étanches. La tenue mécanique n'est assurée que par les agrafes et les vis, ce qui est limité. Pour assurer une bonne tenue mécanique du joint, il est indispensable de créer une bonne adhérence entre les pièces à assembler, ce qui n'est pas possible avec les vis ou agrafes.

D'autre part, les techniques classiques d'assemblage par soudage faisant intervenir un faisceau d'énergie avec ou sans métal d'apport (soudage TIG, électron ou laser) et impliquant une fusion partielle des parties à assembler sont inutilisables pour l'assemblage de céramiques du fait qu'on ne peut pas faire fondre un substrat ou une pièce en céramique, et que, en particulier, le carbure de silicium se décompose avant fusion.

Des techniques courantes pour réaliser des assemblages réfractaires de céramiques sont le soudage par diffusion en phase solide, et l'assemblage frittage ou cofrittage.

Dans l'assemblage par soudage diffusion, on applique à haute température une pression au niveau des interfaces pour permettre une inter-diffusion atomique entre les deux substrats. La température doit rester toujours inférieure à la température de fusion du matériau le moins réfractaire et il n'y a donc aucune phase liquide dans le système. Ce type d'assemblage est réalisé soit sous presse dans une seule direction, soit dans une enceinte isostatique. Le soudage diffusion est bien adapté aux assemblages entre deux alliages métalliques et très peu à l'assemblage de matériaux céramiques car les atomes constituant la céramique diffusent très peu au niveau du joint. En outre, le procédé est rédhibitoire d'un point de vue mécanique, car il nécessite de mettre en compression les substrats et les matériaux poreux et fragiles comme des substrats à base de carbure de silicium, qui risquent d'être fortement endommagés lors de ce chargement mécanique en compression.

L'assemblage-frittage ou cofrittage de pièces en SiC, nécessite également de hautes pressions mais aussi de hautes températures et durées de palier importantes, car ce procédé est basé sur le principe de l'inter-diffusion entre les éléments en SiC.

En d'autres termes, le soudage par diffusion en phase solide ainsi que l'assemblage frittage présentent le désavantage d'être contraignants du point de vue de leur mise en oeuvre car :
- pour le soudage diffusion en phase solide, la forme des pièces doit rester simple si l'on utilise un pressage uniaxial, ou bien nécessiter un outillage et une préparation complexes comprenant par exemple la fabrication d'une enveloppe, la fermeture étanche sous vide, la compression isostatique à chaud, l'usinage final de l'enveloppe, si l'on utilise la CIC (Compression Isostatique à Chaud).
- dans le cas du cofrittage ou assemblage frittage, les mêmes problèmes demeurent (forme des pièces, complexité de mise en oeuvre) avec en plus la nécessité de contrôler le frittage d'une poudre d'apport à intercaler entre les deux matériaux à assembler.
- ces deux techniques nécessitent en outre l'utilisation de paliers de longue durée (une à plusieurs heures) à haute température puisque les processus mis en jeu font intervenir la diffusion à l'état solide.

Il ressort de ce qui précède, et en résumé, qu'afin de garantir notamment une bonne tenue mécanique et éventuellement une étanchéité satisfaisante au niveau de l'assemblage, seuls des procédés utilisant une phase liquide, comme le brasage, peuvent être envisagés.

Le brasage est une technique peu coûteuse, facile de mise en oeuvre, qui est la plus couramment utilisée. Des pièces de formes complexes peuvent être réalisées en faisant du brasage, et les opérations de brasage se limitent à placer entre les pièces à assembler ou à proximité du joint entre les deux pièces, un alliage de brasage, appelé brasure, ou un alliage d'apport, cet alliage étant capable de mouiller et de s'étaler sur les interfaces à assembler pour remplir le joint entre les pièces et à faire fondre cet alliage. Après refroidissement, la brasure se solidifie et assure la cohésion de l'assemblage.

La plupart des compositions de brasure pour les pièces en matériaux à base de carbure de silicium ne sont pas suffisamment réfractaires. Il s'agit généralement de compositions de brasure constituées par des alliages métalliques ayant un point de fusion inférieur, voire très inférieur, à 1000°C. Une telle température de fusion est nettement insuffisante pour les applications à des températures voisines de 1000°C ou 1100°C.

Par ailleurs, la plupart des éléments chimiques qui font partie de ces compositions de brasure métalliques sont fortement réactifs avec le carbure de silicium dès 500°C et créent des composés fragiles.

Par conséquent, dans le cas d'un brasage à plus haute température et mis en oeuvre généralement au-dessus de 1000°C, de telles compositions de brasure ou alliages de brasage attaqueraient chimiquement les matériaux à base de carbure de silicium non seulement pendant l'opération de brasage mais également en fonctionnement par diffusion à l'état solide.

Soulignons en outre que les alliages les moins réactifs sont aussi les moins réfractaires, comme par exemple, l'alliage AgCuTi avec une matrice en Ag-Cu et un élément actif Ti à faible concentration. Pour les applications plus particulièrement visées par l'invention, qui sont celles d'un assemblage moyennement réfractaire avec une température d'utilisation des assemblages pouvant aller généralement jusqu'à 1000°C, voire 1100°C, toutes les compositions de brasure réactives constituées principalement d'argent ou d'argent-cuivre, de cuivre, de nickel, de fer ou de cobalt, de platine, de palladium ou d'or sont donc à exclure du fait de leur forte réactivité avec le carbure de silicium.

Des formulations d'alliages de brasage, compositions de brasure, plus réfractaires et riches en silicium sont présentées dans les documents [1, 2, 3]. Ces compositions de brasure présentent un comportement très peu réactif, voire non-réactif, avec le SiC, ce qui évite la formation des composés fragiles. Ce critère de non-réactivité ou très faible réactivité n'est toutefois pas une condition suffisante pour garantir une bonne tenue mécanique des joints brasés. En effet, dans la littérature, les valeurs des contraintes à rupture sont très variables en fonction du second élément intervenant dans la composition de brasure à base de silicium. Par exemple, pour le système non-réactif Fe-Si (45 % Fe-55 % Si en masse), le document [3] mentionne une contrainte à rupture en traction extrêmement faible de l'ordre de 2 MPa tandis que pour le système Cr-Si (25% Cr-75% Si en masse), ce même document donne une valeur plus élevée, de l'ordre de 12 MPa.

Les propriétés notamment mécaniques d'une composition de brasure à base de silicium sont totalement imprévisibles et ne peuvent absolument pas se déduire des propriétés mécaniques de compositions de brasure à base de Si, même très voisines, déjà connues.

En d'autres termes, lorsque l'on cherche à préparer une composition de brasure à base de silicium, notamment pour braser des pièces à base de SiC, il n'est absolument pas possible de se baser sur les propriétés mécaniques éventuellement acceptables présentées par d'autres compositions de brasure connues à base de Si, car toute modification même très faible d'une composition de brasure à base de Si, aussi bien en ce qui concerne la nature du ou des métaux brasés avec le silicium, que leurs proportions, peut conduire à des changements imprévisibles, inattendus, très importants des propriétés de la composition, et en particulier de ses propriétés mécaniques.

En conclusion, il n'existe pas de possibilité de prédire la mécanique d'un système Si-X donné où X est un métal et encore moins la mécanique d'un système en fonction des proportions de X.

Les températures de brasage des compositions de brasure des documents [1, 2] et [3] sont en général supérieures à 1300°C. Ces températures de brasage sont par exemple de 1355°C pour la composition Ti-Si (22 - 78 % en masse), de 1355°C pour la composition Cr-Si (25 - 75 % en masse), de 1400°C à 1450°C pour la composition Co-Si, et de 1750°C pour la composition Ru₂Si₃.

En effet, l'efficacité de ce procédé d'assemblage nécessite des températures de brasage supérieures à 1300°C pour déstabiliser thermodynamiquement les couches d'oxydes de silicium passivantes qui apparaissent spontanément sur les surfaces de carbure de silicium, car ces couches d'oxyde de silicium nuisent au mouillage par la composition de brasure, même si le brasage est réalisé sous vide.

Par conséquent, les alliages de brasage susmentionnés, riches en silicium et mis en oeuvre à une température supérieure à 1300°C ne sont pas adaptés au brasage de substrats en matériau à base de carbure de silicium dont les propriétés se dégradent après exposition à 1300°C, et a fortiori à 1250°C et même à 1210°C ou au-delà. C'est notamment le cas de certains composites SiC/SiC qui sont dégradés au-delà de 1300°C voire 1250°C.

Le document [3] présente certes une composition de brasure Ge-Si (90% - 10%) dont le brasage peut être mis en oeuvre à seulement 1220°C. Mais, la tenue mécanique de ce joint (contrainte à rupture en traction entre environ 300 et 400 p.s.i. soit entre 2 et 2,75 MPa) est très faible et insuffisante pour de nombreuses applications et notamment les applications principalement visées dans la présente, ceci malgré la faible réactivité de cette brasure avec le SiC.

Le document [2] propose (Exemple 3) un alliage Pt-Si dont le brasage est mis en oeuvre à 1200°C. La teneur en Pt de cette composition de brasure est très élevée (77% en poids de Pt) ce qui conduit à un procédé très onéreux. Cet inconvénient est rédhibitoire pour la réalisation de grandes pièces brasées.

Enfin, le document [4] présente des alliages de brasage avec une teneur en Si inférieure à 50% en masse, de préférence de 10 à 45% en masse, et avec addition d'au moins 2 éléments choisis dans le groupe suivant : Li, Be, B, Na, Mg, P, Sc, Ti, V, Cr, Mn, Fe, Co, Zn, Ga, Ge, As, Rb, Y, Sb, Te, Cs, Pr, Nd, Ta, W et Ti.

Les exemples du document [4] décrivent des compositions de brasure ternaires Si-Cr-Co (11 - 38,5 - 50,5% en masse) ; Si-Cr-Co (40 - 26 - 34 % en masse) ; Si-Fe-Cr (17,2 - 17,5 - 65,3% en masse) ; et Si-Fe-Co (20 - 20 -60% en masse) ; et leur brasage à des températures respectives de 1230°C, 1235°C, 1460°C et 1500°C.

En ce qui concerne les compositions de brasure ayant des températures de brasage inférieures à 1300°C, il est simplement mentionné qu'une liaison « forte » est obtenue et aucun test mécanique ne vient prouver qu'une bonne tenue mécanique des joints est effectivement obtenue. De même, la faible réactivité SiC/brasure n'est ni mentionnée, ni évoquée.

Le document US-B1-6,835,496 décrit un matériau d'électrode négative pulvérulent pour un accumulateur à électrolyte non aqueux et son procédé de préparation.

Ce document se situe donc dans un domaine technique totalement différent, et très éloigné, du domaine technique de l'invention qui est celui de l'assemblage de pièces en SIC par brasage non-réactif.

Le matériau de ce document comprend un ou plusieurs grains de SI formant un « coeur » et une solution solide ou un composé intermétallique contenant du Si qui enveloppe au moins partiellement les grains de Si.

Le matériau d'enveloppe est défini plus précisément à la colonne 6, lignes 37 à 52. Les éléments qui forment la solution solide ou le composé Intermétallique contenant du Si sont de préférence un ou plusieurs éléments choisis parmi les éléments métalliques des groupes 2A, 3B, et 4B autres que Si, et les éléments de transition.

Parmi les éléments de transition, Nd, Pr et Ce sont préférés.

Dans l'exemple 9, on prépare une poudre de silicium et on dépose divers métaux sur cette poudre par un procédé de dépôt sans courant après un traitement thermique et on prépare ainsi un matériau d'électrode négative dans lequel des grains de Si sont enveloppés dans un matériau intermétallique ou une solution solide.

Les divers métaux de placage sont énumérés dans le Tableau 10, le Nd est cité qui forme ainsi le matériau intermétallique NdSi₂ sur les grains de Si.

La composition de ce matériau intermétallique, en ignorant le coeur en Si est en masse de 71,98% de Nd pour 28,02% de Si, soit très en dehors des plages revendiquées.

Le matériau de ce document est spécifiquement un matériau d'électrode négative et rien dans ce document n'indique ni ne suggère que ce matériau puisse être utilisé pour l'assemblage de pièces par brasage non-réactif. *A fortiori,* l'ajout d'un renfort au matériau de ce document, ou d'un liant au matériau de ce document en poudre, afin de réaliser le brasage non-réactif de pièces n'est ni décrit ni suggéré.

Le document US-A1-2006/0162849 concerne un procédé d'assemblage de céramiques par une technique de « *reaction diffusion bonding* » qui n'a rien en commun avec une technique de brasage, et surtout une technique de brasage non-réactif.

Le document « Binary Alloy Phase Diagrams », 2nd Ed., Vol. 3, 1990 présente les diagrammes de phase d'alliages binaires mais sans en évoquer les applications notamment pour le brasage.

Il existe donc, au vu de ce qui précède, un besoin non encore satisfait pour un procédé permettant de réaliser l'assemblage par brasage de pièces en matériaux à base de carbure de silicium, qui assure une tenue mécanique satisfaisante de l'assemblage entre 20°C et 1000°C voire 1100°C, en particulier au-dessus de 500°C et jusqu'à 1000°C voire 1100°C, et éventuellement une étanchéité du joint. Ce procédé doit permettre d'utiliser en particulier des températures de brasage inférieures à 1300°C qui est une température qu'il est absolument indispensable de ne pas dépasser pour certains substrats, pièces à assembler, à base de SiC.

En effet, il est essentiel que les pièces, substrats conservent toute leur intégrité et leurs performances initiales à l'issue de l'opération d'assemblage par brasage. Il existe donc un besoin pour un procédé de brasage utilisant des compositions de brasure qui permettent d'atteindre les températures d'usage souhaitées, à savoir jusqu'à 1000°C voire 1100°C, tout en évitant de soumettre les pièces, substrats en matériaux à base de carbure de silicium à des domaines de température qui pourraient altérer ces matériaux.

En d'autres termes, il existe un besoin pour un procédé de brasage qui permette d'obtenir des joints brasés moyennement réfractaires (avec une utilisation jusque vers 1000°C voire 1100°C) en utilisant des cycles de brasage ne dépassant pas généralement une température limite définie se situant entre 1210°C et 1450°C selon le matériau à base de SiC à assembler.

En effet, de nombreux matériaux à base de carbure de silicium, notamment les composites, sont altérés de manière irréversible au-delà de 1250°C :
c'est notamment le cas de composites SiC/SiC à matrice auto-cicatrisante, dans lesquels des verres protègent les fibres de SiC en fonctionnement sous air vers 800°C par exemple. Des pièces en carbure de silicium avec du silicium infiltré sont détruites dès 1410°C qui est la température de fusion du silicium. En revanche le carbure de silicium pur supporte un brasage à 1450°C. Autrement dit, il existe un besoin pour un procédé et une composition de brasure, alliage de brasage, permettant d'une part d'utiliser tout le potentiel réfractaire des substrats à base de carbure de silicium, avec des températures d'usage jusqu'à environ 1000°C voire 1100°C, et permettant d'autre part de braser à une température de brasage inférieure à la température d'altération des substrats, avec une température de brasage inférieure ou égale à 1450°C, de préférence comprise dans la plage entre 1210°C et 1450°C, de préférence encore inférieure à 1300°C voire mieux inférieure à 1250°C.

Il existe aussi un besoin pour un procédé permettant de réaliser par brasage à une température inférieure ou égale à 1450°C, de préférence entre 1210°C et 1450°C, un assemblage moyennement réfractaire (usage généralement entre 1000°C et 1100°C), de pièces en matériaux à base de carbure de silicium quelles que soient leur forme et/ou leur taille.

Il existe en particulier un besoin pour un procédé de brasage, et pour la composition de brasure associée, permettant de réaliser le brasage à une température inférieure à 1450°C, de préférence entre 1210°C et 1450°C, de pièces à base de carbure de silicium de grandes tailles et/ou de géométries complexes, présentant notamment des surfaces à braser importantes.

En outre, aucun des procédés et des compositions de l'art antérieur ne remplit simultanément les critères suivants, mis en évidence par les inventeurs, et qui sont fondamentaux pour réaliser des composants de structure eh SiC impliquant des joints, moyennement réfractaires :
1) la composition de brasure doit permettre de réaliser une liaison forte entre les deux pièces en matériau à base de carbure de silicium, ce qui implique une composition de brasure non-réactive, c'est-à-dire chimiquement compatible avec le carbure de silicium, et qui ne forme pas de composés fragiles avec celui-ci. Toutefois, la non-réactivité ne garantit pas la création d'une liaison forte car ceci reste imprévisible. La non-réactivité est une condition nécessaire pour avoir une liaison forte mais pas suffisante. Ainsi, le système Fe-Si cité dans la littérature [3] est non-réactif mais sa tenue mécanique est très faible.
2) la composition de brasure doit bien mouiller, le carbure de silicium et bien adhérer à celui-ci.
3) la composition de brasure doit être compatible avec tous les dispositifs de chauffage notamment les dispositifs de chauffage rapides et/ou localisés.
4) la composition de brasure doit permettre la formation de joints présentant une bonne tenue mécanique.
5) la composition de brasure doit être constituée d'un nombre limité d'éléments, afin de faciliter sa préparation et sa mise en oeuvre.
6) la composition de brasure ne doit pas contenir d'éléments onéreux, tels que des métaux précieux.

Enfin, le procédé et la brasure associée doivent permettre le brasage, l'assemblage de tout type de matériau à base de carbure de silicium et doivent pouvoir facilement s'adapter à toute céramique spécifique à base de carbure de silicium.

Le but de l'invention est donc de fournir un procédé d'assemblage par brasage de pièces ou composants en matériaux à base de carbure de silicium qui réponde, entre autres, aux besoins cités plus haut, qui satisfait, entre autres, à l'ensemble des exigences et critères mentionnés ci-dessus, qui élimine les inconvénients, défauts, limitations rencontrés avec les procédés de l'art antérieur, et qui résolve les problèmes des procédés de l'art antérieur.

Le but de l'invention est notamment de fournir un procédé d'assemblage par brasage de pièces ou composants en matériaux à base de carbure de silicium qui permette d'obtenir une tenue mécanique satisfaisante de l'assemblage au-dessus de 500°C et jusqu'à 1000°C, voire 1100°C, qui utilise des températures de brasage inférieures ou égales à 1450°C, de préférence se situant entre 1210°C et 1450°C, et de préférence encore inférieures à 1300°C, et qui éventuellement permette d'obtenir des joints avec une excellente étanchéité.

### EXPOSÉ DE L'INVENTION

Ce but, et d'autres encore, sont atteints conformément à l'invention par un procédé d'assemblage d'au moins deux pièces en matériaux à base de carbure de silicium par brasage non-réactif tel que defini dans la revendication 1, dans lequel on met en contact les pièces avec une composition de brasure non-réactive, on chauffe l'ensemble formé par les pièces et la composition de brasure à une température de brasage suffisante pour faire fondre la composition de brasure, et on refroidit les pièces et la composition de brasure afin de former après solidification de celle-ci un joint moyennement réfractaire ; dans lequel la composition de brasure non-réactive est un alliage binaire constitué, en pourcentages en masse, de 46% à 99% de silicium et de 54% à 1% de néodyme.

Généralement, le brasage est réalisé à une température de brasage inférieure ou égale à 1450°C, de préférence de 1210°C à 1450°C.

Par joint moyennement réfractaire, on entend que ce joint est généralement capable de résister à des températures de fonctionnement allant jusqu'à 1000°C voire 1100°C, et généralement voisines de 1000°C voire 1100°C.

Le procédé selon l'invention, qui est un procédé de brasage à une température généralement inférieure ou égale à 1450°C, de préférence de 1210°C à 1450°C, de préférence encore inférieure ou égale à 1300°C, mettant en oeuvre une composition de brasure spécifique, n'a jamais été décrit dans l'art antérieur.

En particulier, la composition de brasure spécifique mise en oeuvre selon l'invention qui, de manière étonnante permet le brasage à une température généralement inférieure ou égale à 1450°C, de préférence de 1210°C à 1450°C, de préférence encore inférieure ou égale à 1300°C, de pièces en matériaux à base de carbure de silicium n'est en aucune manière mentionnée dans les documents de l'art antérieur cités plus haut.

Ainsi, le document [4] mentionne incidemment le néodyme dans une liste de 27 éléments, parmi lesquels au moins deux doivent être choisis pour former une composition de brasure avec le silicium, ce dernier étant toujours présent à moins de 50% en masse. Dans cette liste Fé, Cr, Co, V, Zn, Ti et Y sont préférés. Le néodyme n'est donc pas cité parmi les éléments préférés.

Aucun des alliages de brasage particulièrement préférés de ce document qui sont les alliages de silicium, de chrome et de cobalt, les alliages de silicium , de chrome et de fer, et les alliages de silicium de fer et de cobalt, et aucune des compositions de brasure exemplifiées dans ce document ne contiennent de terres rares, et a fortiori du néodyme.

En outre, les alliages décrits dans ce document sont beaucoup plus complexes que l'alliage binaire Si-Nd mis en oeuvre selon l'invention. Les alliages de brasage de ce document sont au minimum des alliages ternaires polyconstitués dont l'élaboration et la maîtrise des propriétés sont beaucoup plus délicates que celles des alliages binaires.

Les compositions de brasure des exemples fournis dans le document [4] sont limitées aux systèmes ternaires SiFeCo, SiFeCr, SiCrCo avec une teneur en Si inférieure à 40% massique. Ces compositions ne contiennent pas de terres rares et globalement un nombre très réduit d'éléments par rapport à la liste des 27 éléments d'ajouts possibles. Il est proposé en particulier un alliage 40%Si-26%Cr-34%Co (% en masse) pour une mise en oeuvre vers 1200°C mais aucun essai mécanique n'est présenté qui pourrait démontrer une bonne tenue mécanique des joints. Ajoutons également que les compositions de brasure selon l'invention ont des concentrations en silicium supérieures à 45% en masse, c'est-à-dire une concentration en Si supérieure à celles indiquées dans le document [4].

Le document [4] ne contient aucune indication pouvant conduire à préparer un alliage de brasage binaire, puisqu'il concerne des alliages contenant au minimum trois éléments. Le document [4] ne contient ensuite aucune indication pouvant conduire à choisir le néodyme, et a fortiori une teneur spécifique en celui-ci pour préparer un alliage de brasure binaire compatible avec le SiC, et assurant un brasage à une température généralement inférieure ou égale à 1450°C, de préférence entre 1210°C et 1450°C, de préférence encore à 1300°C ou à moins de 1300°C, de pièces à base de SiC, et un assemblage effectif de ces pièces.

Le procédé selon l'invention répond aux besoins, satisfait à l'ensemble des exigences et des critères mentionnés ci-dessus, et ne présente pas les inconvénients des procédés de l'art antérieur.

En particulier, le procédé selon l'invention permet pour la première fois la préparation d'assemblages moyennement réfractaires, c'est-à-dire avec une température de mise en oeuvre pouvant aller jusqu'à 1000°C voire 1100°C de pièces en matériaux à base de carbure de silicium quelles que soient leur géométrie, même très complexe et/ou leur taille.

Le procédé selon l'invention assure dans tous les cas, notamment, un bon remplissage du joint par la brasure, une excellente tenue mécanique de l'assemblage à température ambiante et à chaud, en particulier au-dessus de 500°C et jusqu'à 1000°C - 1100°C, et éventuellement une bonne étanchéité du joint.

Le procédé selon l'invention est en outre simple, fiable, facile à mettre en oeuvre et au total peu onéreux.

En d'autres termes, les multiples avantages et effets surprenants de l'invention peuvent être énumérés comme suit, sans que cette énumération soit considérée comme limitative :
- en fonction de la composition de l'alliage de brasage sélectionné, plusieurs températures de brasage sont possibles entre 1210°C et 1450°C et peuvent ainsi répondre à différents cahiers des charges.
- l'assemblage obtenu selon l'invention permet de garantir un très bon accrochage mécanique entre les substrats à base de carbure de silicium même pour des températures maximales d'utilisation supérieure à 500°C et pouvant aller par exemple jusqu'à 1000°C voire 1100°C. Les ruptures ont lieu en mode "cohésif", c'est-à-dire que les fissures ont lieu dans les substrats à base de carbure de silicium et non pas au niveau du joint brasé.
- la température de brasage peut être inférieure ou égale à 1300°C et il est donc possible avec le procédé selon l'invention d'assembler des pièces, substrats à base de carbure de silicium qui ne peuvent pas supporter des températures supérieures à 1300°C, voire 1250°C et même 1210°C, comme des pièces, substrats en composite à matrice céramique et fibres céramiques avec matrice auto-cicatrisante ou en SiC infiltré de silicium SiSiC. En d'autres termes, le procédé selon l'invention permet de réaliser le brasage de matériaux à base de SiC qui se dégradent dès 1250°C, voire 1210°C. Le procédé selon l'invention s'applique bien sûr au SiC pur, par exemple le SiC fritté pour lequel on peut utiliser des températures de brasage supérieures à 1300°C, mais aussi à des matériaux moins stables en mettant en oeuvre des compositions de brasure adaptées à ces matériaux moins stables thermiquement.

- de manière surprenante, malgré la température de brasage généralement inférieure à 1450°C, de préférence de 1210°C à 1450°C, de préférence encore inférieure ou égale à 1300°C, mise en oeuvre dans le procédé de l'invention, un bon mouillage de la composition de brasure, de l'alliage de brasage selon l'invention sur les surfaces des substrats, pièces, à base de carbure de silicium à assembler, a été constaté. Ainsi, grâce à ce bon mouillage des surfaces, il est possible selon l'invention de faire du brasage capillaire car la composition de brasure selon l'invention peut remplir toute seule le joint entre les pièces pendant l'opération de brasage.
- une réactivité extrêmement modérée de l'alliage de brasure sur les substrats à base de carbure de silicium a été observée. Il n'y a pas de zones fragilisantes complexes et poreuses au niveau de l'interface.
- le brasage réalisé par le procédé selon l'invention est réversible. Il est ainsi possible de désunir, séparer, les pièces, substrats assemblés, par exemple en vue de leur réparation, en faisant fondre l'alliage de brasage dans un four au cours d'une seconde opération de fusion de cet alliage de brasage, sans altérer les pièces, substrats. Les pièces, substrats peuvent également être séparés par une attaque chimique. En d'autres termes, le procédé selon l'invention permet la réparation des pièces assemblées en matériau à base de carbure de silicium. Cela signifie que ces pièces peuvent subir un second cycle de brasage si besoin pour réparation sans dégradation des propriétés des joints. Cette capacité de réparation est possible du fait de l'absence de réactivité ou de la très faible réactivité des alliages de brasage mis en oeuvre selon l'invention avec le carbure de silicium.

- une autre propriété remarquable obtenue par le procédé selon l'invention est l'homogénéité du joint obtenu après brasage et le très bon comportement mécanique des joints formés.
- il n'est pas nécessaire dans le procédé selon l'invention de métalliser par la brasure les pièces, substrats, en matériau à base de SiC avant l'opération de brasage à une température inférieure à 1300°C, les joints sont bien remplis par la composition de brasure selon l'invention, même en configuration capillaire ;
- il n'est, en outre, pas nécessaire dans le procédé selon l'invention de déposer du carbone sur les pièces, substrats, en matériau à base de SiC avant l'opération de brasage notamment à une température inférieure à 1300°C. La cinétique de mouillage est rapide et l'angle de mouillage est très bon (par exemple inférieur à 20° en moins d'une minute) et les joints sont bien remplis par la composition de brasure selon l'invention, même en configuration capillaire.

- les compositions de brasure selon l'invention ne contiennent aucun élément chimique précieux, notamment des métaux de la famille du platine, ce qui limite leur coût et le coût du procédé les mettant en oeuvre, par rapport à de nombreuses compositions de l'art antérieur.
- les joints brasés obtenus par le procédé selon l'invention sont généralement étanches. Le procédé selon l'invention est par conséquent adapté pour des opérations de scellement devant résister à des températures maximales entre 850°C et 1100°C selon la composition de l'alliage de brasage.

Comme on l'a déjà mentionné plus haut, le comportement des compositions de brasure plus particulièrement pour le brasage du SiC, est extrêmement imprévisible et ne peut en aucun cas se déduire du comportement des compositions de brasure voisines.

Ainsi, il a été mis en évidence que des compositions de brasure constituées par un alliage binaire Si-Y (la concentration en Si étant de 56 à 70% en masse) et non Si-Nd, ne présentaient pas toutes les propriétés avantageuses des compositions de brasure selon l'invention et présentaient de nombreux inconvénients par rapport aux compositions de brasure mises en oeuvre selon l'invention.

La cinétique de mouillage du SiC par l'alliage Si-Y est nettement plus lente que celle de l'alliage Si-Nd selon la présente invention et l'angle de contact stationnaire est supérieur. En effet, après 10 minutes à 1255°C, l'angle est de 70° ; l'angle stationnaire est atteint en 30 minutes et a une valeur de 50°. Les mêmes résultats sont obtenus à 1270°C. Pour réduire la cinétique d'étalement de l'alliage Si-Y, il est nécessaire d'observer un palier de 90 minutes à 1135°C avant de faire le palier de brasage entre 1255°C et 1270°C. Ainsi, dès 10 minutes, l'angle de contact atteint 50°. Au bout de 30 minutes, il est alors légèrement inférieur à 50°. Un dépôt de carbone sur le SiC permet encore d'obtenir un angle stationnaire légèrement inférieur à 40° en 15 minutes. L'exemple n°1 montre que, de manière étonnante, la cinétique de mouillage avec la composition de brasure selon l'invention est extrêmement rapide même pour une température de brasage basse. En effet, l'angle de contact stationnaire est obtenu en moins d'une minute à 1240°C, et cet angle stationnaire obtenu est de l'ordre de 20°.

Des essais de compression / cisaillement comparables à ceux réalisés sur le système Si-Y ont été réalisés à température ambiante avec la composition de brasure selon l'invention. Les contraintes à rupture obtenues avec l'alliage Si-Nd sont très bonnes et de façon surprenante supérieures à celles obtenues avec Si-Y. En effet, pour Si-Y, les valeurs de contraintes à rupture sont de l'ordre de 25 MPa alors qu'elles sont nettement supérieures pour Si-Nd avec une valeur moyenne de l'ordre de 76 MPa (voir exemples 5, 7, 8, 9 et exemple comparatif 11). L'alliage Si-Nd de la présente invention apporte donc de nombreux avantages inattendus par rapport à l'alliage Si-Y.

Des essais comparatifs de compression / cisaillement ont également été réalisés à température ambiante avec le même protocole pour un autre système binaire à base de silicium et avec un autre terre rare, l'élément Ce (voir exemple comparatif 12). Les contraintes à rupture obtenues avec l'alliage Si-Nd sont de façon surprenante supérieures à celles obtenues avec Si-Ce. En effet, pour Si-Ce, les valeurs de contraintes à rupture sont de l'ordre de 20 MPa alors qu'elles sont nettement supérieures pour Si-Nd avec une valeur moyenne de l'ordre de 76 MPa (voir exemples 5, 7, 8, 9 et comparaison avec l'exemple 11).

L'alliage Si-Nd de la présente invention apporte donc de nombreux avantages inattendus par rapport à l'alliage Si-Ce.

La composition de brasure selon l'invention, voir les revendications 19-20, est en outre définie par une teneur spécifique en silicium dans la plage de 46 à 99% en masse. De manière étonnante, il s'est avéré que les propriétés avantageuses des compositions de brasure selon l'invention n'étaient obtenues que dans cette plage spécifique et non à l'extérieur de celle-ci.

Pour des alliages Si-Nd avec des teneurs en silicium inférieures strictement à 46%, les alliages de brasage sont trop réfractaires et imposeraient des brasages entre 1600°C et 1460°C. De plus, la tenue mécanique n'est pas suffisante comme le montre l'exemple comparatif n°10 avec une contrainte à rupture à 30 MPa en test de compression / cisaillement pour l'alliage avec 42% en masse de Si et 58% en masse de Nd alors que les quatre compositions de brasure conformes à l'invention, présentées dans les exemples donnent des contraintes à rupture supérieures, voire très supérieures à 52 MPa et une moyenne à 76 MPa (voir exemples 5, 7, 8, 9) .

En conséquence, rien ne pouvait laisser prévoir que la mise en oeuvre, dans un procédé de brasage de pièces à base de SiC, de la composition spécifique selon l'invention définie par l'association d'un élément spécifique : le néodyme, avec le silicium, dans des proportions spécifiques, pourrait permettre un brasage à une température de 1210 à 1450°C , de préférence de moins de 1300°C, avec tous les effets bénéfiques et avantages énumérés plus haut notamment quant à l'étanchéité du joint et à la tenue mécanique de l'assemblage au-dessus de 500°C sans détérioration des pièces.

La composition de brasure selon l'invention peut être avantageusement constituée en pourcentages en masse, de 48% à 51% de silicium et de 52% à 49% de néodyme, pour un brasage à une température comprise entre 1210°C et 1250°C.

La composition de brasure selon l'invention peut être avantageusement constituée en pourcentages en masse, de 51% à 58% de silicium et de 49% à 42% de néodyme, pour un brasage à une température comprise entre 1250°C et 1300°C selon la composition.

La composition de brasure selon l'invention peut être avantageusement constituée en pourcentages en masse, de 58% à 65% de silicium et de 42% à 35% de néodyme, pour un brasage à une température comprise entre 1300°C et 1350°C selon la composition.

La composition de brasure selon l'invention peut être avantageusement constituée en pourcentages en masse, de 65% à 80% de silicium et de 35% à 20% de néodyme, pour un brasage à une température comprise entre 1350°C et 1400°C selon la composition.

La composition de brasure selon l'invention peut être avantageusement constituée en pourcentages en masse, de 80% à 95% de silicium et de 20% à 5% de néodyme, pour un brasage à une température comprise entre 1400°C et 1430°C selon la composition.

La composition de brasure selon l'invention peut être avantageusement constituée en pourcentages en masse, de 95% à 99% de silicium et de 5% à 1% de néodyme, pour un brasage à une température comprise entre 1430°C et 1450°C selon la composition.

En particulier, la composition de brasure selon l'invention peut être avantageusement constituée en pourcentages en masse, de 48,7% de silicium et de S1,3 % de néodyme pour un brasage à 1240°C ; ou bien la composition de brasure selon l'invention peut être avantageusement constituée en pourcentages en masse, de 60% de silicium et de 40% de néodyme pour un brasage à 1315°C ; ou bien la composition de brasure selon l'invention peut être avantageusement constituée en pourcentages en masse, de 80% de silicium et de 20% de néodyme pour un brasage à 1395°C ; ou bien encore la composition de brasure selon l'invention peut être avantageusement constituée en pourcentages en masse, de 95% de silicium et de 5% de néodyme pour un brasage à 1420°C.

Les différentes compositions de brasure définies par les pourcentages avantageux, précisés ci-dessus ne sont, a fortiori, ni décrites ni suggérées dans l'art antérieur.

Avantageusement, dans le procédé selon l'invention, préalablement au brasage, on peut effectuer un ajout d'un renfort dans la composition de brasure.

Ce renfort peut être en un matériau choisi parmi les céramiques telles que le SiC, et le C.

Ce renfort peut se présenter sous la forme de particules, par exemple d'une poudre ; de fibres ; d'un non-tissé de fibres ; ou d'un tissu de fibres.

L'ajout du renfort peut être réalisé en une quantité de 5 à 49% en masse par rapport à la masse de la composition de la brasure.

Avantageusement dans le procédé selon l'invention, on peut former une poudre de composition de brasure, mettre en suspension cette poudre dans un liant organique de façon à obtenir une suspension ou pâte et enduire au moins une surface des pièces à assembler avec la suspension ou pâte obtenue.

Ainsi on peut enduire une surface à assembler d'au moins l'une des pièces à assembler avec la suspension ou pâte, puis mettre en contact les surfaces à assembler des pièces de façon à ce que la suspension ou pâte soit intercalée entre celles-ci, ou bien on peut mettre en contact les pièces à assembler en observant un décalage entre celles-ci de façon à créer une surface susceptible de recevoir la suspension ou pâte à proximité du joint formé par les surfaces à assembler des pièces à assembler, puis on peut déposer la suspension ou pâte sur cette surface.

Préalablement à la mise en contact avec la composition de brasure, un dépôt de carbone sur au moins une des surfaces à assembler des pièces n'est pas utile.

C'est là précisément un autre des avantages du procédé selon l'invention avec Nd-Si par rapport par exemple à Y-Si, que de pouvoir se passer de ce dépôt de carbone, ce qui évite une étape supplémentaire dans le procédé de brasage.

Avantageusement, le brasage peut être effectué à une température de brasage supérieure d'au moins 15°C, de préférence d'au moins 30°C, à la température de fusion de la composition de brasure.

Avantageusement, le brasage peut être réalisé en effectuant un palier de brasage à une température de brasage de 1210°C à 1450°C, maintenue pendant une durée de 15 à 90 minutes, de préférence de 20 à 90 minutes, de préférence encore de 20 à 60 minutes, mieux de 20 à 30 minutes.

De préférence, le palier de brasage peut être effectué à une température de brasage de 1250°C maintenue pendant une durée de 30 minutes pour des substrats à base de SiC ne supportant pas des températures supérieures à 1300°C auxquelles se produit une dégradation du substrat à braser.

Avantageusement, préalablement au palier de brasage on peut observer un premier palier à une température généralement de 1080°C à 1150°C, de préférence de 1100°C à 1150°C, maintenue pendant une durée de 30 à 120 minutes, de préférence de 60 à 120 minutes, de préférence encore de 90 à 120 minutes.

Avantageusement, les matériaux à base de carbure de silicium peuvent être choisis parmi les carbures de silicium pur tels que le carbure de silicium pur α (SiCα) ou β (SiCβ) et les matériaux composites à base de SiC tels que les composites à fibres et/ou à matrice de carbure de silicium.

Plus particulièrement, les matériaux à base de carbure de silicium peuvent être choisis parmi le carbure de silicium fritté sans pression ("PLS-SiC") ; le carbure de silicium infiltré Si ("SiSiC" ou "RBSC") ; le carbure de silicium recristallisé poreux ("RSiC") ; le graphite silicium ("C-SiC") constitué de graphite et recouvert par une couche de SiC ; les composites SiC/SiC, par exemple, à fibres ou à « whiskers » ; les composites SiC/SiC à matrice auto-cicatrisante ; les composites C/SiC, par exemples, à fibres ou à « whiskers » de carbone et à matrice SiC ; les monocristaux de SiC ; les composites du SiC avec une autre céramique, par exemple les composites SiC/Si₃N₄ et SiC/TiN.

Généralement, lesdits matériaux à basé de carbure de silicium ont une teneur en carbure de silicium au moins égale à 50% en masse, de préférence au moins égale à 80% en masse, et de préférence encore égale à 100% en masse.

L'invention a trait également à un procédé d'assemblage par brasage d'au moins trois pièces en matériaux à base de carbure de silicium dans lequel on réalise les étapes successives suivantes :
a) on assemble par brasage à une température de brasage T1, au moins deux pièces en matériaux à base de carbure de silicium, à l'aide d'une composition de brasure constituée par un alliage binaire de silicium et d'un élément X, ledit alliage étant plus réfractaire que l'alliage binaire constitué, en pourcentages en masse, de 46% à 99% de silicium et de 54% à 1% de néodyme, de préférence que l'alliage binaire constitué, en pourcentages en masse, de 46% à 65% de silicium et de 54% à 35% de néodyme ; de préférence encore que l'alliage binaire constituée en pourcentages en masse, de 46% à 60% de silicium et de 54% à 40% de néodyme, moyennant quoi on obtient un premier assemblage d'au moins deux pièces ;
b) on assemble, par brasage à une température de brasage T2, avec le procédé d'assemblage d'au moins deux pièces en matériaux à base de SiC décrit plus haut (qui utilise une composition de brasure non réactive qui est un alliage binaire, constitué en pourcentages en masse de 46% à 99% de silicium et de 54% à 1% de néodyme) au moins une autre pièce en matériau à base de carbure de silicium avec l'assemblage d'au moins deux pièces obtenu dans l'étape a) .

Avantageusement, T1 est supérieure à T2 d'au moins 40°C.

Avantageusement, X est choisi parmi Ti, Zr, V, Ru, Re, Hf, Cr, et Rh.

Avantageusement, l'alliage binaire de silicium et d'un élément X a une température de fusion supérieure à 1350°C, et la température T1 est de 1400 à 1450°C.

L'invention a également trait à une composition pour le brasage moyennement réfractaire non-réactif de pièces en matériaux à base de carbure de silicium comprenant une composition de brasure non-réactive telle que définie ci-dessus, et en outre, un ajout d'un renfort tel que défini plus haut.

L'invention a trait en outre à une pâte, suspension, de brasure pour le brasage moyennement réfractaire non-réactif de pièces en matériaux à base de carbure de silicium comprenant une poudre d'une composition de brasure telle que définie plus haut, et un liant, cément organique liquide.

D'autres caractéristiques et avantages de l'invention ressortiront mieux à la lecture de la description qui va suivre, donnée à titre illustratif et non limitatif en relation avec les dessins joints, dans lesquels :

### BRÈVE DESCRIPTION DES DESSINS

La Figure 1 est une vue schématique montrant la disposition des plaques de matériau à base de SiC et de la pâte de composition de brasure pour le brasage en configuration capillaire.
La figure 2 est une vue schématique des éprouvettes utilisées pour les essais mécaniques, notamment en compression / cisaillement des joints et assemblages préparés dans les exemples.
La figure 3 est une vue schématique montrant la disposition des plaques de matériau à base de SiC et de la pâte de composition dé brasure pour le brasage en configuration « sandwich ».
La Figure 4 est un graphique qui représente le cycle thermique de brasage utilisé dans l'exemple 5. En abscisse est portée la durée en minutes depuis le début du traitement thermique, et en ordonnée est portée la température T en °C.
La Figure 5 est un graphique qui représente le cycle thermique de brasage utilisé dans l'exemple 7. En abscisse est portée la durée en minutes depuis le début du traitement thermique, et en ordonnée est portée la température T en °C.
La Figure 6 est un graphique qui représente le cycle thermique de brasage utilisé dans l'exemple 8. En abscisse est portée la durée en minutes depuis le début du traitement thermique, et en ordonnée est portée la température T en °C.
La Figure 7 est une vue schématique montrant la disposition de la première et de la deuxième plaques en matériau à base de SiC et de la pâte de composition de brasure SiZr pour le brasage en configuration capillaire de la première et de la deuxième plaques dans les exemples 7 et 8.
La Figuré 8 est une vue schématique montrant la disposition de la première et de la deuxième plaque en matériau à base de SiC brasées avec une composition de brasure SiZr, et de la pâte de la composition de brasure SiNd pour le brasage en configuration capillaire de la première et de la deuxième plaques brasées avec une troisième plaque dans les exemples 7 et 8.

### EXPOSÉ DÉTAILLÉ DE MODES DE RÉALISATION PARTICULIERS

La première étape du procédé selon l'invention consiste, tout d'abord, généralement, à préparer, élaborer une composition de brasure, en d'autres termes un alliage de brasage contenant du silicium, et du néodyme.

L'alliage de brasage selon l'invention est un alliage binaire néodyme (Nd) - Silicium (Si).

La température de fusion de l'alliage de brasage selon l'invention est généralement de 1195°C à 1420°C, de préférence elle est inférieure ou égale à 1300°C. L'élément prépondérant de l'alliage est le silicium.

Les proportions massiques pour l'alliage binaire Si-Nd sont de 46% à 99% de silicium et de 54% à 1% de néodyme.

Des proportions avantageuses et des proportions particulièrement avantageuses ont été indiquées plus haut.

La composition de brasure est, généralement, une composition pulvérulente qui peut être préparée, par exemple, en synthétisant, tout d'abord, à partir des éléments purs un composé inter-métallique contenant du silicium, et du néodyme.

La synthèse d'un tel composé inter-métallique se fait, par exemple, en introduisant le silicium -par exemple, sous la forme de morceaux- le néodyme -par exemple, sous la forme de morceaux ou autres- dans les proportions voulues pour la composition de brasure, dans un creuset réfractaire en alumine, par exemple.

L'ensemble formé par le creuset, le silicium et le néodyme est disposé dans un appareil de chauffage, tel qu'un four, et est chauffé à une température généralement de 1330°C à 1450°C, de préférence sous argon, pour faire fondre les différents constituants de la composition de brasure et obtenir après refroidissement le composé inter-métallique final désiré, homogène sous la forme d'un lingot. La température de chauffage est de préférence de 1330°C pour les compositions comprenant de 46% à 52% en masse de silicium, et elle est de préférence de 1450°C pour les compositions plus riches en silicium. Le composé inter-métailique obtenu est ensuite broyé dans tout appareil adéquat, par exemple, dans un mortier pour obtenir une poudre de granulométrie adéquate, c'est-à-dire, dont les grains ont, par exemple, un diamètre de 1 à 300 µm et qui constitue la composition de brasure.

Ou bien, la composition de brasure binaire selon l'invention peut être préparée par exemple en pesant de la poudre de silicium pur, et de la poudre du composé inter-métallique NdSi₂ dans les proportions retenues pour la composition de brasure selon l'invention et en mélangeant ensuite ces poudres dans un « Turbula » pendant au moins 30 minutes.

La poudre composée du mélange des poudres de composé inter-métallique et de Si constitue, dans ce cas, la composition de brasure.

Ledit composé inter-métallique peut être synthétisé, ou bien il s'agit un composé du commerce se présentant sous la forme d'une poudre de composé inter-métallique de granulométrie et de pureté connues. Parmi ces poudres du commerce, on peut citer, par exemple : la poudre du composé NdSi₂ de marque Neyco^{®}, de pureté 99,9 % et de granulométrie de 50 à 100 µm.

La poudre de silicium pur peut être préparée à partir de morceaux de silicium pur broyé dans tout appareil adéquat, par exemple, dans un mortier, pour obtenir une poudre de granulométrie adéquate dont les grains ont, par exemple, un diamètre de 1 à 250 µm.

Au lieu d'être ainsi préparée, ladite poudre de silicium pur peut également être une poudre du commerce de granulométrie et de pureté connues. Parmi ces poudres du commerce, on peut citer, par exemple : la poudre de Si pur, de marque CERAC^{®}, de pureté de 99,5 % ou 99,99 % et de granulométrie de l'ordre de 50 µm.

Selon l'invention, on peut effectuer, en outre, un ajout d'un renfort dans la composition de brasure préalablement au brasage, afin notamment d'améliorer la tenue mécanique de l'assemblage.

Ce renfort peut être un renfort de C ou d'une céramique telle que le SiC.

Ce renfort peut se présenter sous la forme de particules, par exemple d'une poudre telle qu'une poudre de SiC ; de fibres par exemple de fibres de SiC ou de céramiques; d'un non-tissé dans lequel des fibres sont isolées ; ou d'un tissu de fibres.

Le renfort ajouté tel qu'une poudre de SiC représente, généralement, de 5 à 49% en poids de la composition de brasure. La poudre de SiC peut être, par exemple, une poudre commerciale, telle que la poudre de marque STARCK^{®}, de pureté 98,5 % et de granulométrie inférieure à 10 µm.

La poudre de composition de brasure, (Si et Nd) éventuellement additionnée du renfort tel qu'une poudre de SiC, est mise en suspension de manière classique dans un liant, cément, gel organique liquide, de préférence à la fois visqueux et collant, afin d'obtenir une pâte, suspension de composition de brasure éventuellement additionnée d'un renfort permettant un étalement homogène sur les surfaces des pièces, substrats en matériau à base de carbure de silicium à braser.

Le liant, cément, gel se décompose généralement par exemple entre 100 et 300°C sans laisser de traces. Il peut s'agir par exemple d'un cément de type NICROBRAZ^{®} ou d'un gel (gel Vitta^{®}) .

La deuxième étape du procédé selon l'invention consiste généralement à réaliser l'assemblage par brasage proprement dit.

Préalablement à l'assemblage, les deux (ou plus) surfaces des pièces en matériaux à base de SiC à assembler sont généralement dégraissées, nettoyées, dans un solvant organique par exemple du type cétone, ester, éther, alcool, ou un mélange de ceux-ci, etc.

Un solvant préféré est l'acétone ou un mélange acétone-alcool éthylique-éther par exemple dans les proportions 1/3, 1/3, 1/3 ; on peut aussi nettoyer les pièces successivement avec plusieurs solvants différents par exemple avec de l'acétone puis de l'éthanol. Les pièces sont ensuite séchées.

Les pièces en matériaux à base de SiC à assembler sont en général au nombre de deux, mais on peut aussi assembler simultanément un plus grand nombre de pièces pouvant aller jusqu'à 100.

Par pièce en matériau à base de SiC, on entend généralement tout élément, ou entité de forme et de taille quelconques entrant par exemple, après assemblage avec une ou plusieurs autres pièces, dans des structures de plus grande dimension.

Selon l'invention, il est possible d'assembler, avec à chaque fois d'excellents résultats, des pièces de géométrie, forme complexe et/ou de grande taille, par exemple avec 0,5 m² de surface à braser ou plus.

Par matériau à base de carbure de silicium, on entend généralement ici tous les matériaux comprenant au moins 50% en masse de carbure de silicium, de préférence au moins 80% en masse de carbure de silicium, de préférence encore 100% en masse de carbure de silicium, dans ce dernier cas le matériau est constitué, composé, uniquement de carbure de silicium.

Les matériaux à base de carbure de silicium peuvent être choisis parmi les carbures de silicium pur tels que le carbure de silicium pur α (SiCα) ou β (SiCβ) et les matériaux composites à base de SiC tels que les composites à fibres et/ou à matrice de carbure de silicium.

Comme exemples de matériaux à base de SiC, on peut citer le carbure de silicium dense pur ou carbure de silicium fritté sans pression ("PLS-SiC", à savoir « PressureLess Sintered SiC », en anglais) ; le carbure de silicium infiltré Si (appelé SiSiC ou RBSC contenant 5 à 20 % Si) ; le carbure de silicium recristallisé poreux (appelé RSiC) ; le graphite silicium (C-SiC) constitué de graphite et recouvert par une couche de SiC par exemple de 0,1 à 1 mm d'épaisseur ; ainsi que les composites SiC/SiC, par exemple, à fibres ou à « Whiskers » ; les composites SiC/SiC à matrice auto-cicatrisante ; les composites C/SiC, par exemple, à fibres ou à « Whiskers » de carbone et à matrice SiC ; et encore les monocristaux de SiC ; et les composites du SiC avec une autre céramique, par exemple, les composites SiC/Si₃N₄ et SiC/TiN.

Il a été constaté, de manière surprenante, que le procédé de l'invention permettait un brasage des composites avec d'excellents résultats.

Les deux pièces ou plus à assembler peuvent être en un même matériau, à base de carbure de silicium par exemple en PLS (« Pressureless Sintered ») -SiC, ou en composite SiC-SiC ou chacune des pièces peut être en un matériau différent.

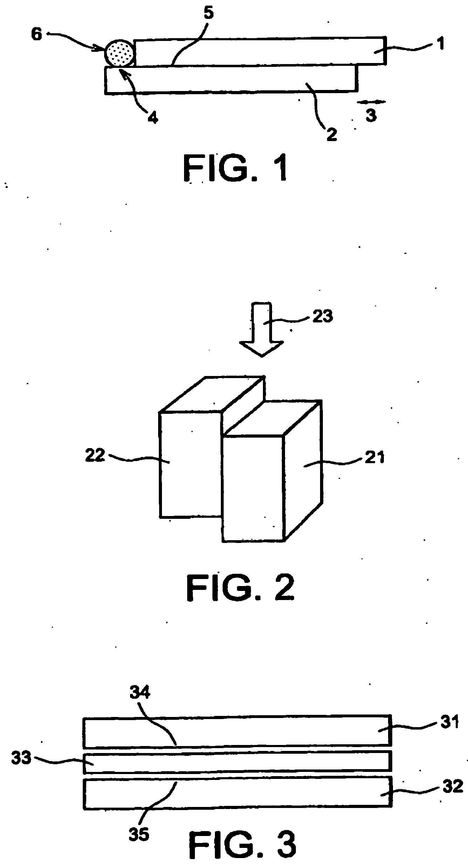

La suspension, pâte de la composition de brasure décrite précédemment, est étalée, enduite, appliquée de manière homogène, uniforme, par exemple avec une brosse, une spatule, un pinceau, ou à l'aide d'une seringue éventuellement fixée à un système robotisé, ou à l'aide de tout autre moyen permettant de déposer une couche de pâte de brasure uniforme, sur la surface d'au moins l'une des pièces en matériau à base de carbure de silicium à assembler. Puis on met en contact la ou les surface (s) enduite (s) de pâte des deux pièces (31, 32) à assembler. Cette configuration de brasage, illustrée sur la Figure 3 est appelée « configuration sandwich » car la pâte de la composition de brasure (33) est placée directement entre les surfaces (34, 35) des pièces à assembler.

La quantité de pâte, suspension de composition de brasure à mettre en oeuvre dans cette configuration est généralement de 10 mg/cm² à 30 mg/cm², par exemple de.20 mg/cm².

La configuration « sandwich » s'applique aussi bien pour des joints « fins », c'est-à-dire d'une épaisseur inférieure à 200 micromètres, que pour des joints épais, c'est-à-dire d'une épaisseur supérieure ou égale à 200 micromètres.

Ou bien comme cela est représenté sur la Figure 1, les pièces à assembler par exemple sous la forme de plaques (1, 2), sont mises en contact, sans avoir mis de composition de brasure entre elles en observant un écart, décalage (3) entre celles-ci, généralement de quelques mm, par exemple de 1 mm, 2 mm, à 10 mm de façon à créer une surface (4) susceptible de recevoir la suspension ou pâte à proximité du joint (5) formé par les surfaces à assembler des pièces à assembler, puis on dépose la suspension ou pâte de composition de brasure par exemple sous la forme d'un cordon de brasure (6) sur cette surface à proximité du joint, au voisinage du joint, au bord du joint. Pendant le cycle thermique de brasage, la composition de brasure liquide s'infiltre dans le joint.

Cette configuration de brasage est appelée « configuration capillaire ». Avec les compositions de brasure selon l'invention, il est possible de réaliser un tel brasage capillaire, avec une infiltration de la brasure liquide dans le joint de brasage pendant le cycle de brasage, sans disposer directement la composition de brasure entre les pièces à assembler comme dans le cas de la « configuration sandwich ».

La quantité de pâte, suspension de composition de brasure à mettre en oeuvre dans cette configuration capillaire est généralement de 10 mg/cm² à 30 mg/cm², par exemple de 20 mg/cm².

Le brasage capillaire est possible pour des joints « fins » d'une épaisseur inférieure à 200 micromètres en l'absence de renforts placés au préalable dans le joint.

Le brasage capillaire peut aussi être possible pour des épaisseurs de joint très supérieures, pouvant aller par exemple jusqu'à quelques millimètres, pour des joints dans lesquels un « renfort mouillage » (c'est-à-dire que la brasure mouille bien la surface du renfort, c'est le cas avec des renforts à base de SiC par exemple) par la composition de brasure a été disposé entre les faces à braser. Ce renfort peut être constitué par exemple par des particules de céramique telle que le SiC, des fibres de céramique telle que le SiC, des particules de C, des fibres de SiC. La brasure, placée au bord du joint, passe à l'état liquide pendant le cycle de brasage et s'infiltre dans le joint et mouille les renforts. Les renforts permettent ainsi l'infiltration dans les joints épais. Le joint est en général constitué d'au moins 50% en volume de l'alliage Si-Nd, ce dernier ayant une composition comprise entre 46% et 99% en masse pour le silicium et 54% et 1% en masse pour le néodyme et en général d'au plus 50% en volume de renforts.

Les pièces prêtes à être brasées sont alors disposées dans un dispositif de chauffage tel qu'un four ou soumises à un chauffage par tout autre moyen adéquat.

Le four est généralement sous vide ou sous atmosphère de gaz neutre.

Généralement, le vide est un vide secondaire, c'est-à-dire que la pression est de 10⁻³ à 10⁻⁵ Pa, par exemple, de 10⁻⁴ Pa.

De préférence, le gaz neutre est de l'argon.

L'invention permet même d'utiliser de l'argon de qualité commerciale (avec généralement 5 ppm d'O₂).

Les pièces à assembler sont soumises par exemple dans le four à un cycle thermique.

Ainsi l'ensemble formé par les pièces et la composition de brasure peut-il être amené à la température de brasage en observant une montée en température de préférence « lente », avec une ou plusieurs rampes de température depuis la température ambiante.

Cette montée en température peut se faire par exemple avec une rampe de température à raison de 1°C à 5°C/minute.

Le palier de brasage est généralement réalisé à une température, qui est la température de brasage, de préférence supérieure d'au moins 15°C, et de préférence encore d'au moins 30°C, à la température de fusion ou température de liquidus de la composition de brasure, alliage de brasage retenue. Cette température de brasage est généralement de 1210°C à 1450°C selon la composition de brasure et les proportions relatives de Nd et de Si dans cette composition.

En effet, selon les compositions, la température du liquidus varie généralement de 1195°C à 1420°C et la température de brasage variera donc, par exemple, comme précisé plus haut, de 1210°C à 1450°C.

On a mentionné 1210°C pour le point le plus bas de la température de brasage car le procédé fonctionne même avec un écart de 15°C entre la température de fusion et la température de brasage, mais un écart d'au moins 30°C est généralement préférable pour les grandes pièces, et la température de brasage la plus basse est alors de 1225°C. De même, la température de brasage la plus haute peut être de 1435°C.

Une telle température de fusion des compositions permet, selon un autre avantage du procédé de l'invention, une utilisation de l'assemblage, jusqu'à 1000°C et même jusqu'à 1100°C.

Pour un brasage aux plus basses températures, c'est-à-dire à une température de brasage entre 1210°C et 1250°C, la composition recommandée est comprise entre 46% massique et 52% massique de Si (soit entre 54% et 48% en masse de Nd).

Pour des teneurs en Si supérieures, les températures de brasage sont plus élevées, typiquement de l'ordre de 1300°C entre 53% et 58% massique en Si et de l'ordre de 1350°C entre 59% et 65% massique en Si, enfin entre 1350°C et 1450°C entre 66% et 99% massique en Si (voir exemples).

De manière surprenante, bien que la température de brasage soit inférieure à 1300°C pour les compositions de brasure comprises entre 46% massique de Si et 52% massique (soit entre 54% en masse de Nd et 48%), un excellent accrochage et un bon mouillage du carbure de silicium sont obtenus avec une cinétique très rapide comme le montrent les essais de goutte posée réalisés avec ces compositions de brasure, ainsi il est possible (voir exemple 1), d'obtenir un angle de contact stationnaire de l'ordre de 20° en moins d'une minute.

Cet excellent mouillage est indispensable pour que la qualité des joints formés soit bonne, car il assure une bonne qualité du remplissage du joint, mais il ne permet pas toujours de garantir un bon comportement mécanique car cette dernière propriété n'est pas prévisible. Or, de manière étonnante, les joints préparés avec des compositions de brasure selon l'invention possèdent aussi d'excellentes propriétés mécaniques.

Le mouillage est bien sûr tout aussi bon pour les compositions plus riches en silicium et mises en oeuvre à plus haute température (voir exemples 2, 3 et 4).

La température de brasage définie plus haut est maintenue pendant une durée de 15 à 90 minutes, de préférence de 20 à 60 minutes, par exemple de 30 minutes, c'est ce que l'on appelle le palier de brasage.

La durée du palier de brasage dépend de la taille des pièces à assembler. On peut en effet aller jusqu'à 60 minutes pour de très grandes pièces avec de grandes surfaces à braser, à savoir typiquement au moins 50x50mm².

Un palier de brasage du procédé selon l'invention pourra être par exemple réalisé à une température de brasage de 1210°C à 1450°C pendant 30 minutes.

La température spécifique du palier de brasage choisie est fonction de la composition de l'alliage de brasage.

Un palier d'homogénéisation par exemple à 1100°C est recommandé voire indispensable pour les grandes pièces (typiquement à partir de 50x50 mm²) afin de garantir l'homogénéité thermique au niveau des pièces à assembler.

Il est à noter que la cinétique de mouillage étant déjà très bonne, il n'est pas utile d'accélérer le mouillage, déjà excellent, ce premier palier est dans le cas des compositions Nd-Si selon l'invention essentiellement voire uniquement un palier d'homogénéisation.

Ce palier peut être remplacé par une montée en température lente, par exemple vers 1100°C.

La durée du premier palier dépend de la taille du four, des dimensions des pièces à braser et des outillages de maintien des pièces à braser.

Ce premier palier qui est donc un palier d'homogénéisation est généralement observé à une température de 1080°C à 1150°C, par exemple de 1100°C avec une durée minimale recommandée d'une heure, par exemple une durée de 60 à 120 minutes avant de réaliser le palier de brasage proprement dit dans les conditions déjà mentionnées ci-dessus.

Aussi bien dans la configuration capillaire que dans la configuration « sandwich », un tel premier palier n'est pas indispensable pour les petites pièces. Un tel premier palier est généralement recommandé voire indispensable dans ces deux configurations pour les grandes pièces, à savoir généralement les pièces qui ont des surfaces à braser supérieures à 50x50 mm², afin de garantir l'homogénéité thermique au niveau des pièces à assembler.

La durée de ces paliers peut être augmentée et par exemple être fixée à 120 minutes pour le premier palier et 90 minutes pour le second palier pour des pièces de très grandes dimensions, par exemple avec 0,5 m² de surface à braser ou plus.

Ou bien, une homogénéisation thermique peut également être obtenue en supprimant ce premier palier et en effectuant une montée en température lente (à raison par exemple de 0,5°C/minutes entre généralement 1080°C et 1150°C, de préférence entre 1100°C et 1150°C, de façon à ce que la durée d'exposition de l'assemblage dans ce domaine de température soit par exemple de l'ordre de 60 à 90 minutes.

Comme le premier palier, une telle montée en température lente est conseillée, voire indispensable, pour les grandes pièces dans les deux configurations.

En fin de cycle de brasage, suite au palier de brasage, on refroidit l'assemblage jusqu'à la température ambiante à raison par exemple de 5°C ou de 6°C par minute.

Pendant le refroidissement, la brasure se solidifie et l'assemblage des pièces en matériau à base de carbure de silicium est effectif aussi bien dans le cas où l'on a utilisé une configuration « sandwich » que dans le cas où l'on a utilisé une configuration « capillaire ».

Les assemblages réalisés par le procédé selon l'invention ont été soumis à des tests de compression / cisaillement (voir Figure 2) à température ambiante. La contrainte à rupture moyenne obtenue est de l'ordre de 76 MPa.

Comme on l'a déjà précisé, cette tenue mécanique peut être encore améliorée en ajoutant des renforts dans la composition de brasure.

Enfin, l'invention permet aussi de réaliser des objets complexes en utilisant d'une part un alliage binaire Si-Nd du domaine de composition compris entre 46% et 99% en masse pour le silicium et 54% et 1% en masse pour le néodyme et d'autre part un alliage d'un autre système Si-X plus réfractaire que Si-Nd.

Le principe consiste à braser dans une première étape un premier ensemble d'éléments, pièces (cet ensemble comprend m éléments, où m est un nombre entier de 2 à 10) en matériau à base de SiC, avec l'alliage le plus réfractaire Si-X à une température de brasage T1. Puis dans une seconde étape, on complète ce premier ensemble par brasage d'autres éléments, pièces en matériaux à base de carbure de silicium (au nombre de n, n étant un entier de 1 à 10), sur le premier ensemble, par le procédé selon l'invention, à l'aide d'un second alliage de brasage Si-Nd à une température de brasage T2 telle que T2 soit inférieure à T1.

On obtient finalement un assemblage de m + n pièces.

En pratique, il est recommandé que l'écart entre T1 et T2 soit au moins de 40°C de façon à ce que les joints formés au niveau du premier ensemble ne fondent pas lors du second cycle de brasage. La composition de l'alliage Si-Nd doit être choisie de façon à respecter l'écart de température d'au moins 40°C entre le premier brasage avec Si-X et le second brasage avec Si-Nd. Parmi les alliages Si-X possibles pour le premier brasage, on peut citer les systèmes Ti-Si, Zr-Si, V-Si, Ru-Si, Re-Si, Hf-Si, Cr-Si, Rh-Si. Par exemple, le domaine de composition entre 46% et 65% en masse pour le silicium et 54% et 35% en masse pour le néodyme est bien adapté pour être associé avec des systèmes Si-X présentant des alliages fondant au-delà de 1350°C et permettant un brasage entre 1400 et 1450°C. Deux exemples de brasage avec deux compositions de brasure Si-Nd ont été réalisés et sont détaillés dans la présente invention (exemples 13 et 14).

Les assemblages de pièces en carbure de silicium comportant des joints préparés par le procédé selon l'invention permettent de réaliser des structures, appareils, composants de formes complexes ayant des températures d'utilisation élevées pouvant aller jusqu'à 1000°C voire 1100°C avec une grande précision.

On sait en effet que les propriétés du carbure de silicium :
- grande dureté ;
- grande rigidité
- faible densité
- bas coefficient de dilatation ;
- résistance à la rupture élevée ;
- bonne résistance au choc thermique ;
- ainsi que sa très bonne conductivité en font un matériau incontournable pour les présentes et les futures applications industrielles, en particulier à haute température.

De plus, le SiC présente une très bonne résistance chimique aux divers acides, y compris l'acide fluorhydrique et une très bonne résistance à l'oxydation sous air à haute température jusqu'à 1300°C.

En d'autres termes, le procédé selon l'invention peut notamment s'appliquer à la fabrication de tout dispositif, appareil, structure, composant, nécessitant un assemblage moyennement réfractaire entre au moins deux substrats, pièces à base de carbure de silicium en garantissant à la fois une bonne tenue mécanique et une étanchéité satisfaisante au niveau de l'assemblage.

Ce type de dispositif, appareil, structure, composant peut répondre à des besoins dans différents domaines :
- le domaine du génie thermique, notamment pour concevoir des échangeurs de chaleur très performants car le carbure de silicium présente une bonne conductivité thermique et une bonne tenue aux hautes températures dans des environnements extrêmes.
- le domaine du génie mécanique pour réaliser dans des dispositifs embarqués des composants légers, rigides, réfractaires, résistant à l'abrasion et résistant aux sollicitations mécaniques.
- le domaine du génie chimique car le carbure de silicium est résistant à de nombreux produits chimiques corrosifs comme par exemple les bases et les acides forts.

- le domaine du génie nucléaire pour la réalisation du gainage des combustibles.
- les domaines de l'optique spatiale (miroir de télescope en SiC) et de l'aéronautique (pièce en composite SiC/SiC).
- l'électronique de puissance qui utilise des substrats en SiC.

L'invention va maintenant être décrite au moyen des exemples suivants donnés bien entendu à titre illustratif et non limitatif.

### Exemple 1 :

Cet exemple décrit des essais de goutte posée réalisés avec une composition, alliage de brasure selon l'invention de composition 48,7% en masse de Si et 51,3% en masse de Nd sur du SiC α pur fritté, en observant un unique palier de brasage à 1240°C.

### a) Préparation de la composition de brasure et de la pâte de brasure

La brasure de composition visée 48,7% en masse de Si et 51,3% en masse de Nd a été préparée à partir de morceaux de Si et de morceaux de Nd pur.

Ces morceaux ont été pesés en respectant les proportions de la composition de brasure et placés dans un creuset en alumine. L'ensemble a été placé dans un four et soumis à un cycle thermique avec un palier à 1330°C sous argon pendant une heure. On obtient ainsi, après refroidissement, un lingot. Ce lingot est concassé pour obtenir une poudre.

Un liant organique (cément NICROBRAZ^{®}) a été ajouté à ce mélange de poudres afin de former une pâte visqueuse.

### b) Essai de « goutte posée » à 1240°C

La pâte de brasure ainsi préparée est utilisée pour former un petit amas de brasure d'une masse de l'ordre de 50 mg. Cet amas de brasure est déposé sur une plaque de Sic préalablement nettoyée.

L'ensemble de l'amas de brasure et de la plaque est placé dans un four de brasage et soumis à un cycle thermique de brasage sous vide secondaire avec un seul et unique palier, qui est le palier de brasage, à 1240°C.

L'amas de brasure fond lors de ce traitement thermique et forme une goutte que l'on appelle « goutte posée ».

L'angle de mouillage, contact de la goutte est mesuré in situ pour différentes durées du palier de brasage.

En moins d'une minute à 1240°C, un angle de mouillage d'environ 20° a été observé. Au bout d'une heure à 1240°C l'angle est toujours de l'ordre de 20° ce qui correspond à l'angle stationnaire.

Après solidification, le SiC et sa goutte de brasure solidifiée ont été découpés, enrobés et polis et ont été observés par microscopie électronique à balayage.

L'interface SiC/brasure ne présente pas de réactivité à l'échelle de la microscopie électronique à balayage, c'est-à-dire qu'il n'y a pas de formation de nouveau composé. En particulier, il n'y a pas eu de formation de composés fragiles à l'interface.

### Exemple 2 :

Cet exemple décrit des essais de goutte posée réalisées avec une composition, alliage de brasure selon l'invention de composition 60% en masse de Si et 40% en masse de Nd sur du SiC α pur fritté, en observant un unique palier de brasage à 1315°C.

### a) Préparation de la composition de brasure et de la pâte de brasure

La brasure de composition visée 60% en masse de Si et 40% en masse de Nd a été préparée à partir de morceaux de Si et de morceaux de Nd pur.

Ces morceaux ont été pesés en respectant les proportions de la composition de brasure et placés dans un creuset en alumine. L'ensemble a été placé dans un four et soumis à un cycle thermique avec un palier à 1440°C sous argon pendant une heure. On obtient ainsi, après refroidissement, un lingot. Ce lingot est concassé pour obtenir une poudre.

Un liant organique (cément NICROBRAZ^{®}) a été ajouté à ce mélange de poudres afin de former une pâte visqueuse.

### b) Essai de « goutte posée » à 1315°C

La pâte de brasure ainsi préparée est utilisée pour former un petit amas de brasure d'une masse de l'ordre de 50 mg. Cet amas de brasure est déposé sur une plaque de SiC préalablement nettoyée.

L'ensemble de l'amas de brasure et de la plaque est placé dans un four de brasage et soumis à un cycle thermique de brasage sous vide secondaire avec un seul et unique palier, qui est le palier de brasage, à 1315°C.

L'amas de brasure fond lors de ce traitement thermique et forme une goutte que l'on appelle « goutte posée ».

L'angle de mouillage, contact de la goutte est mesuré in situ pour différentes durées du palier de brasage.

L'angle de contact est très faible et atteint environ 15° dès 3 minutes à 1315°C, ce qui correspond à l'angle stationnaire.

Après solidification, le SiC et sa goutte de brasure solidifiée ont été découpés, enrobés et polis et ont été observés par microscopie électronique à balayage.

L'interface SiC/brasure ne présente pas de réactivité à l'échelle de la microscopie électronique à balayage, c'est-à-dire qu'il n'y a pas de formation de nouveau composé. En particulier, il n'y a pas eu de formation de composés fragiles à l'interface.

### Exemple 3 :

Cet exemple décrit des essais de goutte posée réalisés avec une composition, alliage de brasure selon l'invention de composition 80% en masse de Si et 20% en masse de Nd sur du SiC α pur fritté, en observant un unique palier de brasage à 1395°C.

### a) Préparation de la composition de brasure et de la pâte de brasure

La brasure de composition visée 80% en masse de Si et 20% en masse de Nd a été préparée à partir de morceaux de Si et de morceaux de Nd pur.

Ces morceaux ont été pesés en respectant les proportions de la composition de brasure et placés dans un creuset en alumine. L'ensemble a été placé dans un four et soumis à un cycle thermique avec un palier à 1440°C sous argon pendant une heure. On obtient ainsi, après refroidissement, un lingot. Ce lingot est concassé pour obtenir une poudre.

Un liant organique (cément NICROBRAZ^{®}) a été ajouté à ce mélange de poudres afin de former une pâte visqueuse.

### b) Essai de « goutte posée » à 1395°C

La pâte de brasure ainsi préparée est utilisée pour former un petit amas de brasure d'une masse de l'ordre de 50 mg. Cet amas de brasure est déposé sur une plaque de SiC préalablement nettoyée.

L'ensemble de l'amas de brasure et de la plaque est placé dans un four de brasage et soumis à un cycle thermique de brasage sous vide secondaire avec un seul et unique palier, qui est le palier de brasage, à 1395°C.

L'amas de brasure fond lors de ce traitement thermique et forme une goutte que l'on appelle « goutte posée ».

L'angle de mouillage, contact, de la goutte est mesuré in situ.pour différentes durées du palier de brasage.

Après 30 secondes à 1395°C, un angle de mouillage de l'ordre de 20° a été observé. Cet angle correspond à l'angle stationnaire.

Après solidification, le SiC et sa goutte de brasure solidifiée ont été découpés, enrobés et polis et ont été observés par microscopie électronique à balayage.

L'interface SiC/brasure ne présente pas de réactivité à l'échelle de la microscopie électronique à balayage, c'est-à-dire qu'il n'y a pas de formation de nouveau composé. En particulier, il n'y a pas eu de formation de composés fragiles à l'interface.

### Exemple 4 :

Cet exemple décrit des essais de goutte posée réalisés avec une composition, alliage de brasure selon l'invention de composition 95% en masse de Si et 5% en masse de Nd sur du SiC α pur fritté, en observant un unique palier de brasage à 1420°C.

### a) Préparation de la composition de brasure et de la pâte de brasure.

La brasure de composition visée 95% en masse de Si et 5% en masse de Nd à été préparée à partir de morceaux de Si et de morceaux de Nd pur.

Ces morceaux ont été pesés en respectant les proportions de la composition de brasure et placés dans un creuset en alumine. L'ensemble a été placé dans un four et soumis à un cycle thermique avec un palier à 1440°C sous argon pendant une heure. On obtient ainsi, après refroidissement, un lingot. Ce lingot est concassé pour obtenir une poudre.

Un liant organique (cément NICROBRAZ^{®}) a été ajouté à ce mélange de poudres afin de former une pâte visqueuse.

### b) Essai de « goutte posée » à 1420°C

La pâte de brasure ainsi préparée est utilisée pour former un petit amas de brasure d'une masse de l'ordre de 50 mg. Cet amas de brasure est déposé sur une plaque de SiC préalablement nettoyée.

L'ensemble de l'amas de brasure et de la plaque est placé dans un four de brasage et soumis à un cycle thermique de brasage sous vide secondaire avec un seul et unique palier, qui est le palier de brasage, à 1420°C.

L'amas de brasure fond lors de ce traitement thermique et forme une goutte que l'on appelle « goutte posée ».

L'angle de mouillage, contact de la goutte est mesuré in situ pour différentes durées du palier de brasage.

Dès 15 secondes à 1420°C, un angle de mouillage d'environ 20° a été observé. Cet angle correspond à l'angle stationnaire.

Après solidification, le SiC et sa goutte de brasure solidifiée ont été découpés, enrobés et polis et ont été observés par microscopie électronique à balayage.

L'interface SiC/brasure ne présente pas de réactivité à l'échelle de la microscopie électronique à balayage, c'est-à-dire qu'il n'y a pas de formation de nouveau composé. En particulier, il n'y a pas eu de formation de composés fragiles à l'interface.

Les exemples 5 à 10 décrivent des expériences d'assemblage par brasage.

### Exemple 5 :

Cet exemple décrit la préparation de liaisons, assemblages entre deux pièces en carbure de silicium SiC a pur fritté, en mettant en oeuvre le procédé de brasage selon l'invention, le brasage étant réalisé en configuration capillaire en utilisant une composition de brasure selon l'invention constituée de 48,7% en masse de Si et de 51,3% en masse de Nd.

Cet exemple décrit en outre des essais, tests mécaniques réalisés sur ces assemblages.

### a) Préparation de la composition de brasure, de la pâte de brasure, et des pièces à assembler

La brasure de composition visée, à savoir 48,7% en masse de Si et 51,3% en masse de Nd a été préparée de la manière décrite dans l'exemple 1.

Un liant organique (cément NICROBRAZ^{®}) a été ajouté au mélange de poudres obtenu afin de former une pâte de brasure visqueuse.

Les pièces en SiC fritté à assembler sont des plaques de dimensions 20x10 mm² et d'épaisseur 1, 5 mm.

Les pièces sont nettoyées à l'acétone puis à l'éthanol et enfin séchées.

Les substrats, pièces sont mis en contact en laissant un petit décalage de 1 à 2 mm, de façon à laisser un espace pour déposer la pâte de brasure à proximité du joint (cette configuration est appelée configuration capillaire). La pâte est déposée avec une spatule sur la surface disponible au bord du joint, sous la forme d'un cordon de brasure (voir la figure 1). La quantité de pâte déposée est comprise entre 40 et 60 mg pour cet assemblage.

### b) Brasage

Les pièces mises en contact et prêtes à être brasées sont placées dans un four de brasage sous vide secondaire et soumises à un cycle thermique de brasage sous vide qui comprend un seul palier de 20 minutes à 1250°C, qui est le palier de brasage.

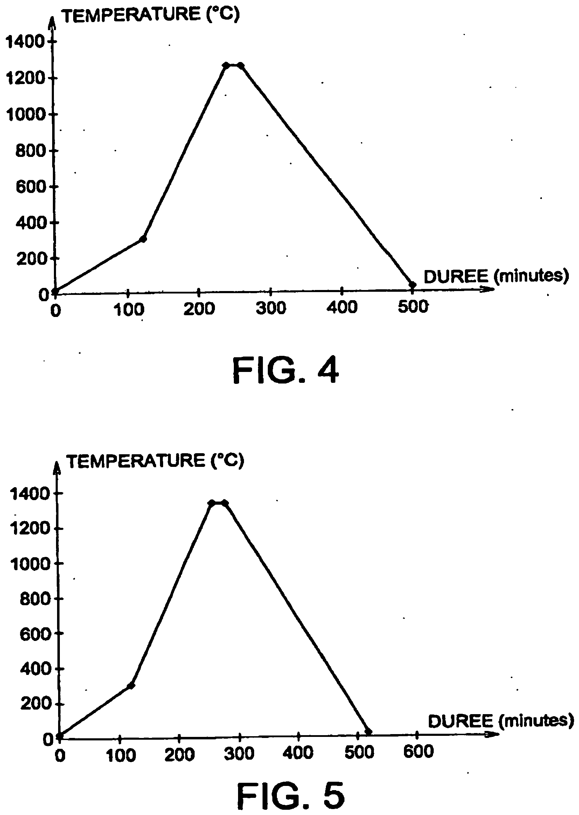

Le cycle thermique est représenté sur la Figure 4.

### c) Observation du joint

Après refroidissement, l'ensemble est bien assemblé. Le joint a été caractérisé en microscopie électronique à balayage. Il n'y a pas de « manque » et une réactivité n'est pas mise en évidence à l'échelle d'observation de la microscopie électronique à balayage.

### d) Préparation des éprouvettes d'essais mécaniques et résultats des essais mécaniques

Des éprouvettes (3 éprouvettes) d'essais mécaniques ont préparées par brasage de 2 pièces de dimensions chacune 20x10x1,5 mm³ (l'épaisseur de l'éprouvette brasée est donc 1,5 + 1,5 = 3 mm) (21, 22) avec la pâte de brasure préparée en a) ci-dessus et dans les conditions de brasage décrites en b) ci-dessus. En effet, la mécanique des céramiques étant statistique, on prépare en vue des essais plus d'une éprouvette mais avec le même procédé de fabrication.

Les éprouvettes sont schématisées sur la Figure 2. Elles sont fixées dans un montage et sollicitées en cisaillement lors d'un test de compression / cisaillement (23) à température ambiante.

Il est à noter que ce test ne permet pas de garantir du cisaillement pur mais c'est le mode préférentiel. Ce test permet cependant de comparer les assemblages entre eux.

### • Résultats des essais mécaniques :

Les contraintes à rupture déterminées pour chacune des 3 éprouvettes sont 63 MPa ; 61 MPa ; et 62 MPa ; soit une moyenne de 62 MPa.

Il est à noter que les valeurs de contraintes à rupture de jonctions, assemblages du type SiC/brasure riche en Si/SiC peuvent être plus ou moins dispersées du fait du caractère fragile des matériaux céramiques.

### Exemple 6 :

Cet exemple décrit la préparation de liaisons, assemblages entre deux pièces en carbure de silicium SiC **α** pur fritté, en mettant en oeuvre le procédé de brasage selon l'invention, le brasage étant réalisé en configuration « sandwich » en utilisant une composition de brasure selon invention constituée de 48,7% en masse de Si et de 51,3% en masse de Nd.

### a) Préparation de la composition de brasure, de la pâte de brasure, et des pièces à assembler

La brasure de composition visée, à savoir 48,7% en masse de Si et 51,3% en masse de Nd a été préparée de la manière décrite dans l'exemple 1.

Un liant organique (cément NICROBRAZ^{®}) a été ajouté au mélange de poudres obtenu afin de former une pâte de brasure visqueuse.

Les pièces en SiC fritté à assembler sont des plaques de dimensions 15x15 mm² et d'épaisseur 1 mm.

Les pièces sont nettoyées à l'acétone puis à l'éthanol et enfin séchées.

La pâte de brasure est étalée avec un pinceau sur les surfaces de substrats, pièces en SiC à assembler. Puis, les surfaces enduites avec la pâte sont mises en contact (Figure 3.).

La quantité de pâte déposée est comprise entre 40 et 60 mg pour cet assemblage.

### b) Brasage

Les pièces mises en contact et prêtes à être brasées sont placées dans un four de brasage sous vide secondaire et soumises, comme dans l'exemple 5, à un cycle thermique de brasage sous vide qui comprend un seul palier de 20 minutes à 1250°C, qui est le palier de brasage.

Le cycle thermique est représenté sur la Figure 4. Le cycle est le même que celui de l'Exemple 5, figure 4.

### c) Observation du joint

Après refroidissement, l'ensemble est bien assemblé. Le joint a été caractérisé en microscopie électronique à balayage. Une réactivité n'est pas mise en évidence à l'échelle d'observation de la microscopie électronique à balayage. Le joint est rempli à 90% et quelques petits manques sont observés.

### Exemple 7 :

Cet exemple décrit la préparation de liaisons, assemblages entre deux pièces en carbure de silicium SiC α pur fritté, en mettant en oeuvre le procédé dé brasage selon l'invention, le brasage étant réalisé en configuration capillaire en utilisant une composition de brasure selon l'invention constituée de 60 % en masse de Si et de 40 % en masse de Nd.

Cet exemple décrit en outre des essais, tests mécaniques réalisés sur ces assemblages.

### a) Préparation de la composition de brasure, de la pâte de brasure, et des pièces à assembler,

La brasure de composition visée, à savoir 60% en masse de Si et 40% en masse de Nd a été préparée de la manière décrite dans l'exemple 2.

Un liant organique (cément NICROBRAZ^{®}) a été ajouté au mélange de poudres obtenu afin de former une pâte de brasure visqueuse.

Les pièces en SiC fritté à assembler sont des plaques de dimensions 20x10 mm² et d'épaisseur 1,5 mm.

Les pièces sont nettoyées à l'acétone puis à l'éthanol et enfin séchées.

Les substrats, pièces sont mis en contact en laissant un petit décalage de 1 à 2 mm, de façon à laisser un espace pour déposer la pâte de brasure à proximité du joint (cette configuration est appelée configuration capillaire). La pâte est déposée avec une spatule sur la surface disponible au bord du joint, sous la forme d'un cordon de brasure (voir la figure 1), comme dans l'exemple 5. La quantité de pâte déposée est comprise entre 40 et 60 mg pour cet assemblage.

### b) Brasage

Les pièces mises en contact et prêtes à être brasées sont placées dans un four de brasage sous vide secondaire et soumises à un cycle thermique de brasage sous vide qui comprend un seul palier de 20 minutes à 1330°C, qui est le palier de brasage.

Le cycle thermique est représenté sur la Figure 5.

### c) Observation du joint

Après refroidissement, l'ensemble est bien assemblé. Le joint a été caractérisé en microscopie électronique à balayage. Il n'y a pas de « manque » et une réactivité n'est pas mise en évidence à l'échelle d'observation de la microscopie électronique à balayage.

### d) Préparation des éprouvettes d'essais mécaniques et résultats des essais mécaniques

Des éprouvettes (3 éprouvettes) d'essais mécaniques ont préparées par brasage de 2 pièces de dimensions 20x10x1,5 mm³ (21, 22) avec la pâte de brasure préparée en a) ci-dessus et dans les conditions de brasage décrites en b) ci-dessus. En effet, la mécanique des céramiques étant statistique, on prépare en vue des essais plus d'une éprouvette mais avec le même procédé de fabrication.

Les éprouvettes sont schématisées sur la figure 2. Elles sont fixées dans un montage et sollicitées en cisaillement lors d'un test de compression / cisaillement (23) à température ambiante (mode de sollicitation préférentiel : cisaillement mais ce test ne permet pas d'obtenir du cisaillement pur).

Les éprouvettes ont des dimensions identiques à celles de l'exemple 5 et sont testées de la même façon.

### • Résultats des essais mécaniques :

Les contraintes à rupture déterminées pour chacune des 3 éprouvettes sont 87 MPa ; 105 MPa ; et 76 MPa ; soit une moyenne de 89 MPa.

### Exemple 8 :

Cet exemple décrit la préparation de liaisons, assemblages entre deux pièces en carbure de silicium SiC α pur fritté, en mettant en oeuvre le procédé de brasage selon l'invention, le brasage étant réalisé en configuration capillaire en utilisant une composition de brasure selon l'invention constituée de 80% en masse de Si et de 20% en masse de Nd.

Cet exemple décrit en outre des essais, tests mécaniques réalisés sur ces assemblages.

### a) Préparation de la composition de brasure, de la pâte de brasure, et des pièces à assembler

La brasure de composition visée, à savoir 80% en masse de Si et 20% en masse de Nd a été préparée de la manière décrite dans l'exemple 3.

Un liant organique (cément NICROBRAZ^{®}) a été ajouté au mélange de poudres obtenu afin de former une pâte de brasure visqueuse.

Les pièces en SiC fritté à assembler sont des plaques de dimensions 20x10 mm² et d'épaisseur 1,5 mm.

Les pièces sont nettoyées à l'acétone puis à l'éthanol et enfin séchées.

Les substrats, pièces sont mis en contact en laissant un petit décalage de 1 à 2 mm, de façon à laisser un espace pour déposer la pâte de brasure à proximité du joint (cette configuration est appelée configuration capillaire). La pâte est déposée avec une spatule sur la surface disponible au bord du joint, sous la forme d'un cordon de brasure (voir la figure 1), comme dans l'exemple 5. La quantité de pâte déposée est comprise entre 40 et 60 mg pour cet assemblage.

### b) Brasage

Les pièces mises en contact et prêtes à être brasées sont placées dans un four de brasage sous vide secondaire et soumises à un cycle thermique de brasage sous vide qui comprend un seul palier de 20 minutes à 1440°C, qui est le palier de brasage.

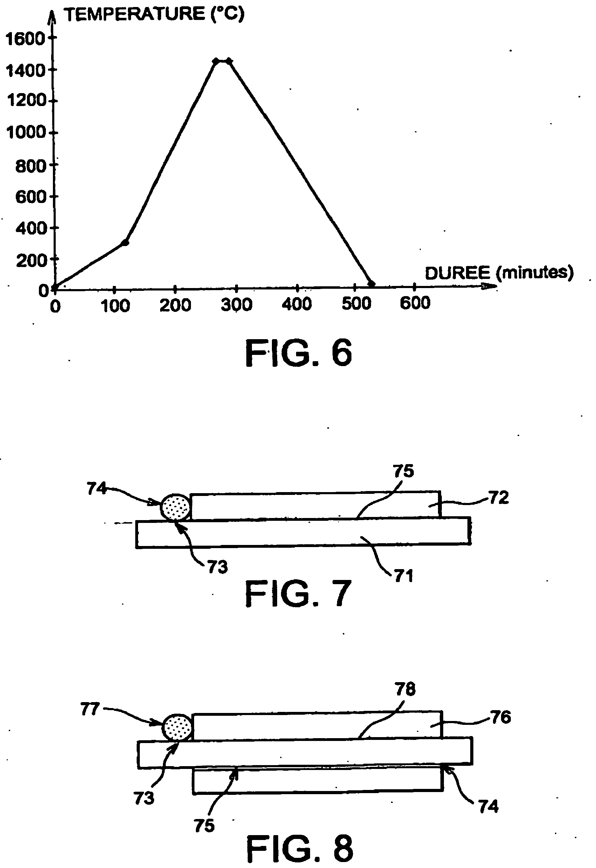

Le cycle thermique est représenté sur la Figure 6.

### c) Observation du joint

Après refroidissement, l'ensemble est bien assemblé. Le joint a été caractérisé en microscopie électronique à balayage. Il n'y a pas de « manque » et une réactivité n'est pas mise en évidence à l'échelle d'observation de la microscopie électronique à balayage.

### d) Préparation des éprouvettes d'essais mécaniques et résultats des essais mécaniques

Des éprouvettes (3 éprouvettes) d'essais mécaniques ont préparées par brasage de 2 pièces de dimensions 20x10x1,5 mm³ (21, 22) avec la pâte de brasure préparée en a) ci-dessus et dans les conditions de brasage décrites en b) ci-dessus. En effet, la mécanique des céramiques étant statistique, on prépare en vue des essais plus d'une éprouvette mais avec le même procédé de fabrication.

Les éprouvettes sont schématisées sur la figure 2. Elles sont fixées dans un montage et sollicitées en cisaillement lors d'un test de compression / cisaillement (23) à température ambiante (mode de sollicitation préférentiel : cisaillement mais ce test ne permet pas d'obtenir du cisaillement pur).

Les éprouvettes ont des dimensions identiques à celles de l'exemple 5 et sont testées de la même façon.

### • Résultats des essais mécaniques :

Les contraintes à rupture déterminées pour chacune des 3 éprouvettes sont 62 MPa ; 129 MPa ; et 68 MPa ; soit une moyenne de 86 MPa.

### Exemple 9 :

Cet exemple décrit la préparation de liaisons, assemblages entre deux pièces en carbure de silicium SiC **α** pur fritté, en mettant en oeuvre le procédé de brasage selon l'invention, le brasage étant réalisé en configuration capillaire en utilisant une composition de brasure selon l'invention constituée de 95% en masse de Si et de 5% en masse de Nd.

Cet exemple décrit en outre des essais, tests mécaniques réalisés sur ces assemblages.

### e) Préparation de la composition de brasure, de la pâte de brasure, et des pièces à assembler

La brasure de composition visée, à savoir 95% en masse de Si et 5% en masse de Nd a été préparée de la manière décrite dans l'exemple 4.

Un liant organique (cément NICROBRAZ^{®}) a été ajouté au mélange de poudres obtenu afin de former une pâte de brasure visqueuse.

Les pièces en SiC fritté à assembler sont des plaques de dimensions 20x10 mm² et d'épaisseur 1,5 mm.

Les pièces sont nettoyées à l'acétone puis à l'éthanol et enfin séchées.

Les substrats, pièces sont mis en contact en laissant un petit décalage de 1 à 2 mm, de façon à laisser un espace pour déposer la pâte de brasure à proximité du joint (cette configuration est appelée configuration capillaire). La pâte est déposée avec une spatule sur la surface disponible au bord du joint, sous la forme d'un cordon de brasure (voir la figure 1), comme dans l'exemple 5. La quantité de pâte déposée est comprise entre 40 et 60 mg pour cet assemblage.

### f) Brasage

Les pièces mises en contact et prêtes à être brasées sont placées dans un four de brasage sous vide secondaire et soumises à un cycle thermique de brasage sous vide qui comprend un seul palier de 20 minutes à 1440°C, qui est le palier de brasage.

Le cycle thermique est représenté sur la Figure 6 et est identique à celui de l'exemple 8.

### g) Observation du joint

Après refroidissement, l'ensemble est bien assemblé. Le joint a été caractérisé en microscopie électronique à balayage. Il n'y a pas de « manque » et une réactivité n'est pas mise en évidence à l'échelle d'observation de la microscopie électronique à balayage.

### h) Préparation des éprouvettes d'essais mécaniques et résultats des essais mécaniques

Des éprouvettes (3 éprouvettes) d'essais mécaniques ont préparées par brasage de 2 pièces de dimensions 20x10x1,5 mm³ (21, 22) avec la pâte de brasure préparée en a) ci-dessus et dans les conditions de brasage décrites en b) ci-dessus. En effet, la mécanique des céramiques étant statistique, on prépare en vue des essais plus d'une éprouvette mais avec le même procédé de fabrication.

Les éprouvettes sont schématisées sur la figure 2. Elles sont fixées dans un montage et sollicitées en cisaillement lors d'un test de compression / cisaillement (23) à température ambiante (mode de sollicitation préférentiel : cisaillement mais ce test ne permet pas d'obtenir du cisaillement pur).

Les éprouvettes ont des dimensions identiques à celles de l'exemple 5 et sont testées de la même façon.

### • Résultats des essais mécaniques :

Les contraintes à rupture déterminées pour chacune des 3 éprouvettes sont 72 MPa ; 68 MPa ; et 53 MPa ; soit une moyenne de 64 MPa.

### Exemple 10 :

Cet exemple est un exemple comparatif qui décrit la préparation de liaisons, assemblages entre deux pièces en carbure de silicium SiC a pur fritté, par un procédé de brasage réalisé en configuration capillaire en utilisant une composition de brasure comparative, non conforme à l'invention constituée de 42% en masse de Si et de 58% en masse de Nd.

Cet exemple décrit en outre des essais, tests mécaniques réalisés sur ces assemblages.

### a) Préparation de la composition de brasure, de la pâte de brasure, et des pièces à assembler

La brasure de composition visée, à savoir 42% en masse de Si et 58% en masse de Nd a été préparée de la manière décrite dans l'exemple 2 en modifiant bien entendu les concentrations en Si et Nd.

Un liant organique (cément NICROBRAZ^{®}) a été ajouté au mélange de poudres obtenu afin de former une pâte de brasure visqueuse.

Les pièces en SiC fritté à assembler sont des plaques de dimensions 20x10 mm² et d'épaisseur 1, 5 mm.

Les pièces sont nettoyées à l'acétone puis à l'éthanol et enfin séchées.

Les substrats, pièces sont mis en contact en laissant un petit décalage de 1 à 2 mm, de façon à laisser un espace pour déposer la pâte de brasure à proximité du joint (cette configuration est appelée configuration capillaire). La pâte est déposée avec une spatule sur la surface disponible au bord du joint, sous la forme d'un cordon de brasure (voir la figure 1), comme dans l'exemple 5. La quantité de pâte de brasure déposée est comprise entre 40 et 60 mg pour cet assemblage.

### b) Brasage

Les pièces mises en contact et prêtes à être brasées sont placées dans un four de brasage sous vide secondaire et soumises à un cycle thermique de brasage sous vide qui comprend un seul palier de 20 minutes à 1460°C, qui est le palier de brasage.

### c) Observation du joint

Après refroidissement, l'ensemble est bien assemblé. Le joint a été caractérisé en microscopie électronique à balayage. Il n'y a pas de « manque » et une réactivité n'est pas mise en évidence à l'échelle d'observation de la microscopie électronique à balayage.

### d) Préparation des éprouvettes d'essais mécaniques et résultats des essais mécaniques

Des éprouvettes (3 éprouvettes) d'essais mécaniques ont préparées par brasage de 2 pièces de dimensions 20x10x1,5 mm³ (21, 22) avec la pâte de brasure préparée en a) ci-dessus et dans les conditions de brasage décrites en b) ci-dessus. En effet, la mécanique des Céramiques étant statistique, on prépare en vue des essais plus d'une éprouvette mais avec le même procédé de fabrication.

Les éprouvettes sont schématisées sur la figure 2. Elles sont fixées dans un montage est sollicitées en cisaillement lors d'un test de compression / cisaillement (23) à température ambiante (mode de sollicitation préférentiel : cisaillement mais ce test ne permet pas d'obtenir du cisaillement pur).

Les éprouvettes ont des dimensions identiques à celles de l'exemple 5 et sont testées de la même façon.

### • Résultats des essais mécaniques :

Une des contraintes à rupture déterminées est de 30 MPa, ce qui est nettement en-dessous de la moyenne des contraintes à rupture obtenues dans les exemples conformes à l'invention réalisés avec des compositions de brasure selon l'invention qui est de 76 MPa, et qui est aussi nettement en-dessous de la valeur la plus basse des contraintes à rupture obtenues dans les exemples conformes à l'invention, réalisés avec des compositions de brasure selon l'invention, qui est de 53 MPa.

### Exemple 11 :

Cet exemple décrit la préparation de liaisons, assemblages entre deux pièces en carbure de silicium SiC α pur fritté, par un procédé de brasage réalisé en configuration capillaire en utilisant une composition de brasure comparative, non conforme à l'invention, constituée de 59% en masse de Si et de 41% en masse de Y.

Cet exemple décrit en outre des essais, tests mécaniques réalisés sur ces assemblages.

### a) Préparation de la composition de brasure, de la pâte de brasure, et des pièces à assembler.

La brasure de composition visée, à savoir 59% en masse de Si et 41% en masse de Y a été préparée à partir de poudre de Si et de poudre de YSi₂.

Ces poudres ont été pesées eh respectant les proportions de la composition de brasure visée. Elles ont ensuite été mélangées au « Turbula » pendant au moins 30 minutes pour obtenir un mélange de poudres homogène.

Un liant organique (cément NICROBRAZ^{®}) a été ajouté à ce mélange de poudres afin de former une pâte visqueuse.

Les pièces en SiC fritté à assembler sont des plaques de dimensions 20x20 mm² et d'épaisseur 1 mm.

Les pièces sont nettoyées à l'acétone puis à l'éthanol et enfin séchées.

Les substrats, pièces sont mis en contact en laissant un décalage de 1 à 2 mm, de façon à laisser un espace pour déposer la pâte de brasure à proximité du joint (cette configuration est appelée configuration capillaire) comme dans l'exemple 5. La pâte est déposée avec une spatule sur la surface disponible au bord du joint, sous la forme d'un cordon de brasure (voir la figure 1). La quantité déposée est comprise entre 50 et 100 mg pour cet assemblage.

### b) Brasage

Les pièces mises en contact et prêtes à être brasées sont placées dans un four de brasage sous vide secondaire et soumises à un cycle thermique de brasage sous vide secondaire. Le cycle thermique comprend deux paliers :
- un premier palier de 90 minutes à 1135 °C;
- un second palier qui est le palier de brasage à 1270°C.

### c) Observation du joint

Après refroidissement, l'ensemble est bien assemblé. Le joint a été caractérisé en microscopie électronique à balayage. Il n'y a pas de « manque » et une réactivité à l'échelle de la microscopie électronique à balayage n'est pas mise en évidence à l'échelle de la microscopie électronique à balayage.

### d) Préparation des éprouvettes d'essais mécaniques et résultats des essais mécaniques

Des éprouvettes (4 éprouvettes) d'essais mécaniques ont préparées par brasage de 2 pièces de dimensions 20x10x1 mm³ (21, 22) avec la pâte de brasure préparée en a) ci-dessus et dans les conditions de brasage décrites en b) ci-dessus. En effet, la mécanique des céramiques étant statistique, on prépare en vue des essais plus d'une éprouvette mais avec le même procédé de fabrication.

Les éprouvettes sont schématisées sur la figure 2. Elles sont fixées dans un montage et sollicitées en cisaillement par compression / cisaillement (23) comme dans les exemples 5, 7, 8, 9 et 10 à température ambiante.

### • Résultats des essais mécaniques :

Les valeurs des contraintes à rupture déterminées pour chacune des 4 éprouvettes sont 27 MPa ; 21 MPa ; 21 MPa ; 34 MPa ; soit une moyenne de 25 MPa.

Les valeurs de ces contraintes à rupture sont nettement inférieures à celles des exemples 5, 7, 8, et 9, dont la moyenne est de 76 MPa.

### Exemple 12 :

Cet exemple décrit la préparation de liaisons, assemblages entre deux pièces en carbure de silicium SiC **α** pur fritté, par un procédé de brasage réalisé en configuration capillaire en utilisant une composition de brasure comparative, non conforme à l'invention du système Si-Ce, constituée de 57% en masse de Si et de 43% en masse de Ce.

Cet exemple décrit en outre des essais, tests mécaniques réalisés sur ces assemblages.

### a) Préparation de la composition de brasure, de la pâte de brasure, et des pièces à assembler

La brasure de composition visée, à savoir 57% en masse de Si est 43% en masse de Ce a été préparées à partir de poudre de Si et de poudre de CeSi₂.

Ces poudres ont été pesées en respectant les proportions de la composition de brasure visée. Elles ont ensuite été mélangées au « Turbula » pendant au moins 30 minutes pour obtenir un mélange de poudres homogène.

Un liant organique (cément NICROBRAZ^{®}) a été ajouté à ce mélange de poudres afin de former une pâte visqueuse.

Les pièces en SiC fritté à assembler sont des plaques de dimensions 20x20 mm² et d'épaisseur 1 mm.

Les pièces sont nettoyées à l'acétone puis à l'éthanol et enfin séchées.

Les substrats, pièces sont mis en contact en laissant un décalage de 1 à 2 mm, de façon à laisser un espace pour déposer la pâte de brasure à proximité du joint (cette configuration est appelée configuration capillaire) comme dans l'exemple 5. La pâte est déposée avec une spatule sur la surface disponible au bord du joint, sous la forme d'un cordon de brasure (voir la figure 1). La quantité déposée est comprise entre 50 et 100 mg pour cet assemblage.

### b) Brasage

Les pièces mises en contact et prêtes à être brasées sont placées dans un four de brasage sous vide secondaire et soumises à un cycle thermique de brasage sous vide secondaire. Le cycle thermique comprend un palier unique à 1280°C pendant 20 minutes, qui est le palier de brasage.

### c) Observation du joint.

Après refroidissement, l'ensemble est bien assemblé. Le joint a été caractérisé en microscopie électronique à balayage. Il n'y a pas de « manque » et une réactivité à l'échelle de la microscopie électronique à balayage n'est pas mise en évidence à l'échelle de la microscopie électronique à balayage.

### d) Préparation des éprouvettes d'essais mécaniques et résultats des essais mécaniques

Des éprouvettes (2 éprouvettes) d'essais mécaniques ont préparées par brasage de 2 pièces de dimensions 20x10x1,5 mm³ (21, 22) avec la pâte de brasure préparée en a) ci-dessus et dans les conditions de brasage décrites en b) ci-dessus. En effet, la mécanique des céramiques étant statistique, on prépare en vue des essais plus d'une éprouvette mais avec le même procédé de fabrication.

Les éprouvettes sont schématisées sur la figure 2. Elles sont fixées dans un montage et sollicitées en cisaillement par compression / cisaillement (23) à température ambiante selon le même protocole que dans les exemples 5, 7, 8, 9, 10, et 11.

### • Résultats des essais mécaniques :

Les valeurs des contraintes à rupture déterminées pour chacune des 2 éprouvettes sont 10 MPa et 29 MPa ; soit une moyenne de 20 MPa.

Les valeurs de ces contraintes à rupture sont nettement inférieures à celles des exemples 5, 7, 8, et 9, conformes à l'invention dont la moyenne est de 76 MPa.

### Exemple 13 :

Dans cet exemple, on réalise l'assemblage de 3 plaques de SiC α pur fritté à l'aide de deux brasages successifs à deux températures de brasage différentes avec respectivement une composition de brasure Si-Nd et une composition de brasure Si-Zr.

La brasure Si-Zr a été préparée à partir d'un mélange de deux poudres Si et ZrSi₂ dans des proportions choisies de façon à respecter la composition 11,5% masse Zr-88,5% masse Si visée. Ce mélange a ensuite été homogénéisé au « Turbula » pendant au moins 30 minutes. Un liant organique (cément Nicrobraz^{®} ou gel Vitta^{®}) a été ajouté à ce mélange de poudres afin de former la pâte de brasure. Trois plaques en SiC (2 plaques de dimensions 40x40x1 mm³ et 1 plaque de dimensions 50x50x1 mm³) sont nettoyées à l'acétone puis à l'éthanol et enfin séchées.

Une plaque de dimensions 50x50x1 mm³ (71) est recouverte avec une plaque de dimensions 40x40x1 mm³ (72). Un espace (73) est disponible au bord de la plaque supérieure (72) pour déposer la pâte de brasure (74) à proximité du joint (75). La pâte est déposée avec une spatule sur la surface disponible au bord du joint, sous la forme d'un cordon de brasure (74), la quantité de brasure déposée étant 200 mg (Figure 7).

L'ensemble est placé dans un four et soumis à un cycle thermique de brasage sous vide secondaire avec un palier de brasage de 20 minutes à 1420°C. Après refroidissement, l'ensemble est bien brasé.

Cet ensemble est ensuite mis en contact avec la troisième plaque (76) de SiC α pur fritté de dimensions 40x40x1 mm³ comme indiqué sur la figure 8. La pâte de brasure SiNd de composition 48,7% Si - 51,3% Nd (% massique) a été préparée à partir des éléments purs Si et Nd comme indiqué dans l'exemple 1. La pâte de brasure (77) est déposée au bord du second joint (78) (figure 8), la quantité de brasure déposée étant 420 mg. L'ensemble est placé dans un four et soumis à un cycle thermique de brasage sous vide secondaire avec un palier d'homogénéisation de 2 heures à 1100°C suivi d'un palier de brasage à 1250°C pendant 30 minutes.

Après ce cycle thermique, les trois plaques sont bien brasées. La brasure ZrSi n'a pas fondu au moment du second cycle de brasage puisque cette brasure commence à fondre à partir de 1370°C, soit 120°C au-dessus de la température du second palier de brasage. Les joints ainsi formés ont été caractérisés par métallographie et sont bien remplis par les brasures.

### Exemple 14 :

Dans cet exemple, on réalise l'assemblage de 3 plaques de SiC α pur fritté à l'aide de deux brasages successifs à deux températures de brasage différentes avec respectivement une brasure Si-Nd et une brasure Si-Zr, la brasure Si-Nd ayant une composition différente de celle de l'exemple 13.

Un premier ensemble de deux plaques est brasé avec la brasure Si-Zr de composition 11,5% masse Zr-88,5% masse Si, comme détaillée dans l'exemple 13 avec un palier de brasage de 20 minutes à 1420°C (plaques de mêmes dimensions que dans l'exemple 13) (Figure 7).

Cet ensemble est ensuite mis en contact avec la troisième plaque de SiC α pur fritté de dimensions 40x40x1 mm³.

La pâte de brasure Si-Nd de composition 60% Si - 40% Nd (% massique) a été préparée à partir des éléments purs Si et Nd comme indiqué dans l'exemple 2. La pâte de brasure est déposée au bord du second joint (Figure 8), la quantité de brasure déposée étant 400 mg. L'ensemble est placé dans un four et soumis à un cycle thermique de brasage sous vide secondaire avec un palier d'homogénéisation de 2 heures à 1100°C suivi d'un palier de brasage à 1330°C pendant 30 minutes.

Après ce cycle thermique, les trois plaques sont bien brasées. La brasure ZrSi n'a pas fondu au moment du second cycle de brasage puisque cette brasure commence à fondre à partir de 1370°C, soit 40°C au-dessus de la température du second palier de brasage. Les joints ainsi formés ont été caractérisés par métallographie et sont bien remplis par les brasures.

### REFERENCES

[1] Gasse A., Coing-Boyat G., Bourgeois G., "*Method using a thick joint for joining parts in SiC-based materials by refractory brazing and refractory thick joint thus obtained*", Brevet US-A-5 975 407, 1999.
[2] Gasse A., *"Method for assembling parts made of materials based on SiC by non-reactive refractory brazing, brazing composition, and joint and assembly obtained by said method",* Demande US-A1-2003/0038166.
[3] Heap H., *"Method for assembling parts made of materials based on SiC by non-reactive refractory brazing, brazing composition, and joint and assembly obtained by said method",* Brevet US-A-2003/0038166, 1974.
[4] Montgomery F.C., Streckert H.H., *Braze for Silicon Carbide bodies,* Brevet US-A-5 447 683, 1995, representant l'état de la technique le plus proche.

## Revendications

1. Procédé d'assemblage d'au moins deux pièces (1, 2) en matériaux à base de carbure de silicium par brasage non-réactif, dans lequel on met en contact les pièces (1, 2) avec une composition (4) de brasure non-réactive, on chauffe l'ensemble (1, 2, 4) formé par les pièces (1, 2) et la composition (4) de brasure à une température de brasage suffisante pour faire fondre la composition (4) de brasure, et on refroidit les pièces (1, 2) et la composition (4) de brasure afin de former après solidification de celle-ci un joint moyennement réfractaire ; **caractérisé en ce que** la composition (4) de brasure non-réactive est un alliage binaire constitué, en pourcentages en masse, de 46% à 99% de silicium et de 54% à 1% de néodyme.

2. Procédé selon la revendication 1, dans lequel la température de brasage est inférieure ou égale à 1450°C, de préférence la température de brasage est de 1210°C à 1450°C.

3. Procédé selon la revendication 1, dans lequel ladite composition (4) de brasure est un alliage binaire, constitué en pourcentages en masse, de 48% à 51% de silicium et de 52% à 49% de néodyme, par exemple de 48,7% de silicium et de 51,3% de néodyme ; ou un alliage binaire, constitué en pourcentages en masse, de 51% à 58% de silicium, et de 49% à 42% de néodyme ; ou un alliage binaire, constitué en pourcentages en masse, de 58% à 65% de silicium, et de 42% à 35% de néodyme, par exemple de 60% de silicium et de 40% de néodyme ; ou un alliage binaire, constitué en pourcentages en masse, de 65% à 80% de silicium, et de 35% à 20% de néodyme, par exemple de 80% de silicium et de 20% de néodyme ; ou un alliage binaire, constitué en pourcentages en masse, de 80% à 95% de silicium, et de 20% à 5% de néodyme, par exemple de 95% de silicium et de 5% de néodyme ; ou un alliage binaire, constitué en pourcentages en masse, de 95% à 99% de silicium, et de 5% à 1% de néodyme.

4. Procédé selon l'une quelconque des revendications précédentes dans lequel, préalablement au brasage, on effectue un ajout d'un renfort dans la composition (4) de brasure, de préférence en une quantité de 5 à 49 % en masse par rapport à la masse de la composition (4) de la brasure.

5. Procédé selon la revendication 4, dans lequel le renfort est en un matériau choisi parmi les céramiques telles que le SiC, et le C.

6. Procédé selon l'une quelconque des revendications 4 et 5, dans lequel le renfort se présente sous la forme de particules, par exemple d'une poudre ; de fibres ; d'un non-tissé de fibres ; ou d'un tissu de fibres.

7. Procédé selon l'une quelconque des revendications précédentes, dans lequel on forme une poudre de composition de brasure, on met en suspension cette poudre dans un liant organique de façon à obtenir une suspension ou pâte et en ce qu'on enduit au moins une surface des pièces à assembler avec la suspension ou pâte obtenue.

8. Procédé selon la revendication 7, dans lequel on enduit une surface à assembler d'au moins l'une des pièces à assembler avec la suspension ou pâte, puis on met en contact les surfaces à assembler (34, 35) des pièces (31, 32) de façon à ce que la suspension ou pâte (33) soit intercalée entre celles-ci.

9. Procédé selon la revendication 7, dans lequel les pièces à assembler (1, 2) sont mises en contact en observant un décalage (3) entre celles-ci de façon à créer une surface (4) susceptible de recevoir la suspension ou pâte à proximité du joint (5) formé par les surfaces à assembler des pièces à assembler, puis on dépose la suspension ou pâte (6) sur cette surface (4).

10. Procédé selon l'une quelconque des revendications précédentes, dans lequel le brasage est effectué à une température de brasage supérieure d'au moins 15°C, de préférence d'au moins 30°C, à la température de fusion de la composition de brasure.

11. Procédé selon la revendication 10, dans lequel le brasage est réalisé en effectuant un palier de brasage à une température de brasage de 1210°C à 1450°C, maintenue pendant une durée de 15 à 90 minutes, de préférence de 20 à 90 minutes, de préférence encore de 20 à 60 minutes, mieux de 20 à 30 minutes ; de préférence le palier de brasage est effectué à une température de brasage de 1250°C maintenue pendant une durée de 30 minutes.

12. Procédé selon la revendication 11, dans lequel préalablement au palier de brasage, on observe un premier palier à une température de 1080°C à 1150°C, de préférence de 1100°C à 1150°C, maintenue pendant une durée de 30 à 120 minutes, de préférence de 60 à 120 minutes, de préférence encore de 90 à 120 minutes.

13. Procédé selon l'une quelconque des revendications précédentes, dans lequel les matériaux à base de carbure de silicium sont choisis parmi les carbures de silicium pur tels que le carbure de silicium pur a (SiCα) ou P (SiCβ) et les matériaux composites à base de SiC tels que les composites à fibres et/ou à matrice de carbure de silicium.

14. Procédé selon l'une quelconque des revendications précédentes, dans lequel les matériaux à base de carbure de silicium sont choisis parmi le carbure de silicium fritté sans pression ("PLS-SiC") ; le carbure de silicium infiltré Si ("SiSiC" ou "RBSC") ; le carbure de silicium recristallisé poreux ("RSiC") ; le graphite silicium ("C-SiC") constitué de graphite et recouvert par une couche de SiC ; les composites SiC/SiC, par exemple, à fibres ou à « whiskers » ; les composites SiC/SiC à matrice auto-cicatrisante ; les composites C/SiC, par exemple, à fibres ou à « whiskers » de carbone et à matrice SiC ; les monocristaux de SiC ; les composites du SiC avec une autre céramique, par exemple les composites SiC/Si₃N₄ et SiC/TiN.

15. Procédé selon l'une quelconque des revendications précédentes, dans lequel lesdits matériaux à base de carbure de silicium ont une teneur en carbure de silicium au moins égale à 50% en masse, de préférence au moins égale à 80% en masse, et de préférence encore égale à 100% en masse.

16. Procédé d'assemblage par brasage d'au moins trois pièces en matériaux à base de carbure de silicium dans lequel on réalise les étapes successives suivantes :
a) on assemble par brasage à une température de brasage T1, au moins deux pièces (71, 72) en matériaux à base de carbure de silicium, à l'aide d'une composition de brasure constituée par un alliage binaire de silicium et d'un élément X, de préférence choisi parmi Ti, Zr, V, Ru, Re, Hf, Cr, et Rh, ledit alliage étant plus réfractaire que l'alliage binaire constitué, en pourcentages en masse, de 46% à 99% de silicium et de 54% à 1% de néodyme, de préférence que l'alliage binaire constitué en pourcentages en masse de 46% à 65% de silicium et de 54% à 35% de néodyme, de préférence encore que l'alliage binaire constitué en pourcentages en masse de 46% à 60% de silicium et de 54% à 40% de néodyme ; moyennant quoi on obtient un premier assemblage d'au moins deux pièces ;
b) on assemble, par brasage à une température de brasage T2, avec le procédé selon l'une quelconque des revendications 1 à 15, au moins une autre pièce (76) en matériau à base de carbure de silicium avec l'assemblage d'au moins deux pièces (71, 72) obtenu dans l'étape a).

17. Procédé selon la revendication 16, dans lequel T1 est supérieure à T2 d'au moins 40°C.

18. Procédé selon l'une quelconque des revendications 16 à 17, dans lequel l'alliage binaire de silicium et d'un élément X a une température de fusion supérieure à 1350°C, et la température T1 est de 1400 à 1450°C.

19. Composition pour le brasage non-réactif de pièces en matériaux à base de carbure de silicium comprenant une composition de brasure non réactive comprenant du silicium et du néodyme, et en outre, un ajout d'un renfort, **caractérisée en ce que** la composition de brasure est un alliage binaire constitué en pourcentages en masse de 46% à 99% de silicium et de 54% à 1% de néodyme.

20. Pâte, suspension, de brasure pour le brasage moyennement réfractaire non-réactif de pièces en matériaux à base de carbure de silicium comprenant une poudre d'une composition de brasure non réactive comprenant du silicium et du néodyme, et un liant, cément, organique liquide, **caractérisée en ce que** la composition de brasure est un alliage binaire constitué en pourcentages en masse de 46% à 99% de silicium et de 54% à 1% de néodyme.

## Patentansprüche

1. Verfahren zur Zusammenfügung von mindestens zwei Teilen (1, 2) aus Materialien auf der Basis von Siliciumcarbid durch nicht-reaktives Löten, bei dem man die Teile (1, 2) mit einer nicht-reaktiven Lotzusammensetzung (4) in Kontakt bringt, man das durch die Teile (1, 2) und die Lotzusammensetzung (4) gebildete Ganze (1, 2, 4) auf eine zum Schmelzen der Lotzusammensetzung (4) ausreichende Löttemperatur erhitzt, und man die Teile (1, 2) und die Lotzusammensetzung (4) abkühlt, so dass sie, nach ihrer Erstarrung, eine mittelmäßig refraktäre Fuge bildet; **dadurch gekennzeichnet, dass** die nicht-reaktive Lotzusammensetzung (4) eine binäre Legierung ist, die massebezogen aus 46% bis 99% Silicium und 54% bis 1% Neodym besteht.

2. Verfahren nach Anspruch 1, bei dem die Löttemperatur niedriger oder gleich 1450°C ist und vorzugsweise zwischen 1210°C und 1450°C liegt.

3. Verfahren nach Anspruch 1, bei dem die Lotzusammensetzung (4) eine binäre Legierung ist, die massebezogen aus 48% bis 51% Silicium und 52% bis 49% Neodym besteht, zum Beispiel aus 48,7% Silicium und 51,3% Neodym ; oder eine binäre Legierung ist, die massebezogen aus 51% bis 58% Silicium und 49% bis 42% Neodym besteht; oder eine binäre Legierung ist, die massebezogen aus 58% bis 65% Silicium und 42% bis 35% Neodym besteht; zum Beispiel aus 60% Silicium und 40% Neodym ; oder eine binäre Legierung ist, die massebezogen aus 65% bis 80% Silicium und 35% bis 20% Neodym besteht; zum Beispiel aus 80% Silicium und 20% Neodym ; oder eine binäre Legierung ist, die massebezogen aus 80% bis 95% Silicium und 20% bis 5% Neodym besteht; zum Beispiel aus 95% Silicium und 5% Neodym ; oder eine binäre Legierung ist, die massebezogen aus 95% bis 99% Silicium und 5% bis 1% Neodym besteht.

4. Verfahren nach einem der vorhergehenden Ansprüche, bei dem man vor dem Löten der Lotzusammensetzung (4) ein Verstärkungsmittel dazugibt, vorzugsweise in einer massebezogenen Menge von 5% bis 49 % der Lotzusammensetzung (4).

5. Verfahren nach Anspruch 4, bei dem das Verstärkungsmittel ein unter den Keramiken wie zum Beispiel SiC und C ausgewählter Stoff ist.

6. Verfahren nach einem der Ansprüche 4 und 5, bei dem das Verstärkungsmittel in der Form von Partikeln, zum Beispiel eines Pulvers ; von Fasern ; von einem Vliesstoff aus Fasern; oder von einem Faserngewebe, präsentiert.

7. Verfahren nach einem der vorhergehenden Ansprüche, bei dem man ein Lotzusammensetzungspulver herstellt, man dieses Pulver in einem organischen Bindemittel in Lösung bringt, so dass man eine Suspension oder Paste erhält, und man wenigstens eine Fläche der zusammenzufügenden Teile mit der erhaltenen Suspension oder Paste bestreicht.

8. Verfahren nach Anspruch 7, bei dem man eine Zusammenfügungsfläche von wenigstens einem der zusammenzufügenden Teile mit der Suspension oder Paste bestreicht, man dann die Zusammenfügungsflächen (34, 35) der Teile (31, 32) so in Kontakt bringt, dass die Suspension oder Paste sich zwischen ihnen befindet.

9. Verfahren nach Anspruch 7, bei dem die zusammenzufügenden Teile (1, 2) mit einer Verschiebung (3) gegeneinander in Kontakt gebracht werden, um eine Fläche (4) für die Aufnahme der Suspension oder Paste in der Nähe der durch die zusammenzufügenden Flächen der zusammenzufügenden Teile gebildete Fuge (5) zu schaffen, und man dann die Suspension oder Paste (6) auf dieser Fläche (4) anbringt.

10. Verfahren nach einem der vorhergehenden Ansprüche, bei dem das Löten bei einer Löttemperatur erfolgt, die mindestens 15 °C und vorzugsweise mindestens 30 °C höher ist als die Schmelztemperatur der Lotzusammensetzung.

11. Verfahren nach Anspruch 10, bei dem das Löten auf einer Lötstufe mit einer Temperatur von 1210 °C bis 1450 °C erfolgt, die aufrecht erhalten wird zwischen 15 und 90 Minuten, vorzugsweise zwischen 20 und 90 Minuten, besser zwischen 20 und 60 Minuten, noch besser zwischen 20 und 30 Minuten ; vorzugsweise wird die Lötstufe mit einer Temperatur von 1250 °C während einer Dauer von 30 Minuten durchgeführt.

12. Verfahren nach Anspruch 11, bei dem man vor der Lötstufe eine erste Stufe mit einer Temperatur von 1080 °C bis 1150 °C, vorzugsweise von 1100 °C bis 1150 °C vorsieht, die aufrecht erhalten wird während einer Dauer von 30 bis 120 Minuten, besser von 60 bis 120 Minuten, noch besser von 90 bis 120 Minuten.

13. Verfahren nach einem der vorhergehenden Ansprüche, bei dem die Materialien auf der Basis von Siliciumcarbid ausgewählt werden unter den reinen Silicumcarbiden wie zum Beispiel reines alpha-SiC (SiCα) oder beta-SiC (SiCβ) und die Verbundmaterialien auf SiC-Basis wie etwa die Verbundwerkstoffe mit Siliciumcarbidfasern und/oder mit Siliciumcarbid-Matrix.

14. Verfahren nach einem der vorhergehenden Ansprüche, bei dem die Materialien auf der Basis von Siliciumcarbid ausgewählt werden unter drucklos gesintertem Siliciumcarbid ("PLS-SiC") ; siliciuminfiltriertem Siliciumcarbid ("SiSiC" oder "RBSC") ; porösem rekristallisiertem Siliciumcarbid ("RSiC") ; Siliciumgraphit ("C-SiC"), bestehend aus Graphit und überzogen mit einer SiC-Schicht ; den SiC/SiC-Verbundmaterialien, zum Beispiel mit Fasern oder "Whiskers" ; den SiC/SiC-Verbundwerkstoffen mit selbstvernarbender Matrix ; den C/SiC-Verbundwerkstoffen, zum Beispiel mit Kohlenstofffasern oder "-whiskers" und SiC-Matrix ; den SiC-Monokristallen ; den Verbundwerkstoffen des SiC mit einer anderen Keramik, zum Beispiel den SiC/Si₃N₄- und SiC/TiN-Verbundwerkstoffen.

15. Verfahren nach einem der vorhergehenden Ansprüche, bei dem die genannten Materialien auf der Basis von Siliciumcarbid einen massebezogenen Siliciumcarbidgehalt von wenigstens 50 %, bevorzugt von wenigstens 80 %, und noch bevorzugter von 100 % hat.

16. Verfahren zur Zusammenfügung von wenigstens drei auf Siliciumcarbid basierenden Teilen durch Löten, bei dem man die folgenden sukzessiven Schritte ausführt:
a) zusammenfügen von wenigstens zwei Teilen (71, 72) aus einem auf Siliciumcarbid basierenden Material durch Löten mittels einer Lotzusammensetzung, bestehend aus einer binären Legierung aus Silicium und einem Element X, vorzugsweise ausgewählt unter Ti, Zr, V, Ru, Re, Hf, Cr, und Rh, wobei die genannte Legierung refraktärer ist als die massebezogen aus 46% bis 99% Silicium und 54% bis 1% Neodym bestehende binäre Legierung, bevorzugter als die massebezogen aus 46% bis 65% Silicium und 54% bis 35% Neodym bestehende binäre Legierung, noch bevorzugter als die massebezogen aus 46% bis 60% Silicium und 54% bis 40% Neodym bestehende binäre Legierung ; wodurch man eine erste Zusammenfügung bzw. einen ersten Verbund aus wenigstens zwei Teilen erhält;
b) zusammenbauen, durch Löten bei einer Löttemperatur T2 mit Hilfe des Verfahrens nach einem der Ansprüche 1 bis 15, wenigstens eines weiteren Teils (76) aus einem Material auf der Basis von Siliciumcarbid mit dem in Schritt a) hergestellten Verbund aus wenigstens zwei Teilen (71, 72).

17. Verfahren nach Anspruch 16, bei dem T1 um wenigstens 40 °C höher ist als T2.

18. Verfahren nach einem der Ansprüche 16 bis 17, bei dem die binäre Legierung aus Silicium und einem Element X eine Schmelztemperatur von mehr als 1350 °C hat und die Temperatur T2 1400 bis 1450 °C beträgt.

19. Zusammensetzung für das nicht-reaktive Löten von Teilen aus Materialien auf der Basis von Siliciumcarbid, umfassend eine nicht-reaktive, Silicium und Neodym umfassende Lotzusammensetzung, und außerdem einer Zugabe eines Verstärkungsmittels,
**dadurch gekennzeichnet, dass** die Lotzusammensetzung eine binäre Legierung ist, massebezogen bestehend aus 46% bis 99% Silicium und 54% bis 1% Neodym.

20. Lotpaste, Lotsuspension für das nicht-reaktive mittelmäßig refraktäre Löten von Teilen aus Materialien auf der Basis von Siliciumcarbid, umfassend ein Pulver einer Silicium und Neodym umfassenden nicht-reaktiven Lotzusammensetzung, und einem flüssigen organischen Bindemittel, Zement,
**dadurch gekennzeichnet, dass** die Paste, Suspension eine binäre Legierung, volumenbezogen bestehend aus 46% bis 99% Silicium und 54% bis 1% Neodym ist.

## Claims

1. A method for assembling at least two parts (1,2) made of silicon carbide-based materials by non-reactive brazing, wherein the parts (1,2) are contacted with a non-reactive brazing composition (4), the assembly (1,2,4) formed by the parts (1,2) and the brazing composition (4) is heated to a brazing temperature sufficient to melt the brazing composition (4), and the parts (1,2) and the brazing composition (4) are cooled so that, after solidification of said brazing composition, a moderately refractory joint is formed; **characterized in that** the non-reactive brazing composition is a binary alloy consisting, in mass percentages, of 46% to 99% silicon and 54% to 1% neodymium.

2. The method according to claim 1, wherein the brazing temperature is equal to or lower than 1450°C, preferably the brazing temperature is from 1210°C to 1450°C.

3. The method according to claim 1, wherein said brazing composition (4) is a binary alloy, consisting in mass percentages, of 48% to 51% silicon, and 52% to 49% neodymium, for example 48.7 % silicon, and 51.3 % neodymium; or a binary alloy, consisting in mass percentages, of 51% to 58% silicon, and 49% to 42% neodymium; or a binary alloy, consisting in mass percentages, of 58% to 65% silicon, and 42% to 35% neodymium, for example 60% silicon, and 40% neodymium; or a binary alloy, consisting in mass percentages, of 65% to 80% silicon, and 35% to 20% neodymium, for example 80% silicon, and 20 % neodymium; a binary alloy, consisting in mass percentages, of 80% to 95% silicon, and 20% to 5% neodymium, for example 95% silicon and 5% neodymium; or a binary alloy, consisting in mass percentages, of 95% to 99% silicon, and 5% to 1% neodymium.

4. The method according to any one of the preceding claims wherein, prior to brazing, a reinforcement is added to the brazing composition (4), preferably in an amount of 5 to 49% by mass relative to the weight of the brazing composition (4).

5. The method according to claim 4, wherein the reinforcement is made of a material chosen from among the ceramics such as SiC, and C.

6. The method according to either of claims 4 and 5, wherein the reinforcement is in the form of particles, for example of a powder; of fibres; of a non-woven made of fibres; or of a fibre fabric.

7. The method according to any one of the preceding claims wherein a powder of brazing composition is formed, this powder is placed in suspension in an organic binder so as to obtain a suspension or paste, and in that at least one surface of the parts to be assembled is coated with the suspension or paste obtained.

8. The method according to claim 7, wherein a surface to be assembled of at least one of the parts to be assembled is coated with the suspension or paste, then the surfaces to be assembled (34, 35) of the parts (31, 32) are contacted so that the suspension or paste (33) is inserted there between.

9. The method according to claim 7, wherein the parts to be assembled (1, 2) are placed in contact observing an offset (3) between them so as to create a surface (4) able to receive the suspension or paste close to the joint (5) formed by the surfaces to be assembled of the parts to be assembled, and the suspension or paste (6) is deposited on this surface (4).

10. The method according to any one of the preceding claims, wherein brazing is conducted at a brazing temperature that is least 15°C, preferably at least 30°C higher than the melting point of the brazing composition.

11. The method according to claim 10, wherein brazing is performed by conducting a brazing plateau at a brazing temperature of 1210°C to 1450°C, held for a time of 15 to 90 minutes, preferably 20 to 90 minutes, more preferably 20 to 60 minutes, further preferably 20 to 30 minutes; preferably the brazing plateau is conducted at a brazing temperature of 1250°C and is held for a time of 30 minutes.

12. The method according to claim 11 wherein, prior to the brazing plateau, a first plateau is observed at a temperature of 1080°C to 1150°C, preferably 1100°C to 1150°C, held for a time of 30 to 120 minutes, preferably 60 to 120 minutes, more preferably 90 to 120 minutes.

13. The method according to any one of the preceding claims, wherein the silicon carbide-based materials are chosen from among pure silicon carbides such as pure α silicon carbide (α-SiC) or pure β silicon carbide (β-SiC) and composite SiC-based materials such as composites with silicon carbide fibres and/or a silicon carbide matrix.

14. The method according to any one of the preceding claims, wherein the silicon carbide-based materials are chosen from among pressureless sintered silicon carbide ("PLS-SiC"); Si-infiltrated silicon carbide ("SiSiC" or "RBSC"); porous, recrystallized silicon carbide ("RSiC"); silicon graphite ("C-SiC") consisting of graphite and coated with a layer of SiC; SiC/SiC composites e.g. with fibres or whiskers; SiC/SiC composites with self-healing matrix; C/SiC composites e.g. with carbon fibres or whiskers and a SiC matrix; SiC monocrystals; SiC composites with another ceramic e.g. SiC/Si₃N₄ and SiC/TiN composites.

15. The method according to any one of the preceding claims, wherein said silicon carbide-based materials have a silicon carbide content of at least 50 % by mass, preferably at least 80 % by mass, more preferably of 100 % by mass.

16. A method for assembling by brazing at least three parts made of silicon carbide-based materials, wherein the following successive steps are performed:
a) at a brazing temperature T1 at least two parts (71, 72) made of silicon carbide-based materials are assembled by brazing, using a brazing composition consisting of a binary alloy of silicon and of an element X, preferably chosen from among Ti, Zr, V, Ru, Re, Hf, Cr and Rh, said alloy being more refractory than the binary alloy consisting, in mass percentages, of 46% to 99% silicon and 54% to 1% neodymium, preferably than the binary alloy consisting, in mass percentages, of 46% to 65% silicon and 54 % to 35 % neodymium, more preferably than the binary alloy consisting, in mass percentages, of 46% to 60% silicon and 54% to 40% neodymium; whereby a first assembly of at least two parts is obtained;
b) by brazing at a brazing temperature T2, by the method according to any one of claims 1 to 15, at least one other part (76) made of a silicon carbide-based material is assembled with the assembly of at least two parts (71, 72) obtained at step a).

17. The method according to claim 16, wherein T1 is higher than T2 by at least 40°C.

18. The method according to any one of claims 16 to 17, wherein the binary alloy of silicon and of an element X has a melting point higher than 1350°C, and the temperature T1 is 1400 to 1450°C.

19. A composition for the non-reactive brazing of silicon carbide-based materials comprising a non-reactive brazing composition comprising silicon and neodymium, and in addition, an added reinforcement, **characterized in that** the brazing composition is a binary alloy consisting in mass percentages of 46% to 99% silicon and 54% to 1% neodymium.

20. A brazing paste, suspension for the non-reactive moderately refractory brazing of parts made of silicon carbide-based materials, comprising a powder of a non-reactive brazing composition comprising silicon and neodymium, and a liquid organic cement, binder, **characterized in that** the brazing composition is a binary alloy consisting in mass percentages of 46% to 99% silicon and 54% to 1% neodymium.
